# EUROPÄISCHE PATENTSCHRIFT

(11) **EP 2 843 261 B1**
(45) Veröffentlichungstag und Bekanntmachung des Hinweises auf die Patenterteilung: **13.06.2018**
(21) Anmeldenummer: 14002960.4
(22) Anmeldetag: 27.08.2014
(51) Int. Cl.: F16H 19/06, B23K 20/10

(54) **Zugmittelspanner, Vibrationsschweißanlage mit Zugmittelspanner sowie Herstellungsverfahren eines Zugmittelspanners**
Traction means tensioner, vibration welding device having a traction means tensioner as well as production method for a traction means tensioner.
Mécanisme de traction, installation de soudage par vibrations dotée d'un mécanisme de traction et procédé de fabrication d'un mécanisme de traction

(30) Priorität: 29.08.2013 DE 102013217272
(43) Veröffentlichungstag der Anmeldung: 04.03.2015
(73) Patentinhaber: Branson Ultraschall Niederlassung der Emerson Technologies GmbH & Co. oHG, 63128 Dietzenbach (DE)
(72) Erfinder: Lukes, Zbynèk, 92209 Borovce (SK)
(74) Vertreter: Heyer, Volker

(56) Entgegenhaltungen:
- DE-A1- 2 728 790
- DE-U1- 9 421 884
- GB-A- 2 042 121
- GB-A- 2 095 365
- JP-A- S58 196 355
- US-A- 3 429 028

## Beschreibung

Die vorliegende Erfindung betrifft einen Zugmittelspanner, die Verwendung eines Zugmittelspanners in einer Schweißanlage, eine Vibrationsschweißanlage mit einem Zugmittelspanner, ein Herstellungsverfahren eines Zugmittelspanners, ein Umrüstverfahren einer Schweißanlage sowie ein Spannverfahren für ein Zugmittel.

In den letzten Jahren haben verstärkt elektrisch angetriebene Vibrationsschweißanlagen den Markt erobert. Ein Vibrationsschweißsystem der Vibrationsschweißanlage, insbesondere ein Schwingkopf, ist dabei üblicherweise elektrisch angetrieben. Im Gegensatz dazu wurden jedoch lange Zeit Zustellsysteme der Vibrationsschweißanlage hydraulisch oder in seltenen Fällen pneumatisch betrieben. Der Begriff Zustellsystem umfasst hierbei sämtliche beweglichen Elemente der Vibrationsschweißanlage, die bewirken, dass ein erstes zu verschweißendes Werkstück in Richtung eines zweiten zu verschweißenden Werkstücks, das am Schwingkopf angeordnet ist, bewegt wird bzw. in dieses eingefädelt wird. Beispielsweise wurde ein Hubtisch als Element des Zustellsystems der Vibrationsschweißanlage über Jahre hinweg hydraulisch angetrieben. Der Einsatz von elektrischen Antrieben, wie beispielsweise eines Spindelantriebs, war wegen der Vibrationen bzw. Schwingungen der Vibrationsschweißanlage kritisch bis unmöglich. Dies ist insbesondere darin begründet, dass während des Schweißprozesses selbst die beiden zu verschweißenden Werkstücke gegeneinander gedrückt werden müssen und sich so eine Vibration auf alle Elemente der Vibrationsschweißanlage überträgt, auch auf den Spindelantrieb, der die beiden zu verschweißenden Werkstücke gegeneinander drückt. Der Spindelantrieb ist jedoch nicht auf solche Vibrationsbelastungen ausgelegt bzw. dafür geeignet, so dass sich die Lebensdauer des Spindelantriebs entsprechend verkürzt.

Daher wurde von der Firma BRANSON schon vor Jahren ein elektrischer Antrieb für die Zustellsysteme entwickelt, der ein Zugmittel verwendet, nämlich Ketten oder Riemen. Ein zu bewegendes Element des Zustellsystems, beispielsweise der Hubtisch, ist hierbei mit dem Zugmittel fest verbunden. Das Zugmittel selbst wird von einem geeigneten Antrieb bewegt, beispielsweise von einem Servomotor oder einem Asynchronmotor. Im Gegensatz zum Spindelantrieb sind die Zugmittel in der Lage, die vom Schwingkopf der Vibrationsschweißanlage erzeugten Schwingungen aufzunehmen und gegebenenfalls mit zu schwingen. Da die vom Schwingkopf erzeugten Schwingungen sich unvermeidlich auch auf einen Maschinenrahmen und auf den Hubtisch der Vibrationsschweißanlage übertragen, ist ein Mitschwingen des Zugmittels umso wichtiger.

Insbesondere im Hinblick auf den Schweißprozess einer Vibrationsschweißanlage wird eine Kraft auf die zu verschweißenden Werkstücke dadurch aufgebracht, dass das Zustellsystem, insbesondere der Hubtisch, das erste zu verschweißende Werkstück gegen das sich am Schwingkopf angeordnete zweite zu verschweißende Werkstück drückt. Dabei wird das Zugmittel, also der Riemen oder die Kette, im Bereich der zu verschweißenden Werkstücke stark gespannt, während das Zugmittel auf der den zu verschweißenden Werkstücken gegenüberliegenden Seite entspannt wird.

Ein sich daraus ergebender allgemeiner Nachteil bei der Verwendung von Zugmitteln, insbesondere in Vibrationsschweißanlagen, ist, dass sich das Zugmittel im Laufe der Zeit längt. Eine solche Längung muss dann üblicherweise manuell ausgeglichen werden, um Betriebsstörungen oder erhöhten Verschleiß zu vermeiden.

Gerade im Hinblick auf Riemen, insbesondere Zahnriemen, als Zugmittel müssen diese nach im Vergleich zu Ketten als Zugmittel kürzerer Betriebszeit nachgespannt werden. Auch besteht bei Riemen die Fehlerquelle, dass die Spannung zu hoch oder zu niedrig eingestellt wird. Weiterhin verlieren die Riemen erfahrungsgemäß gerade zu Beginn, also bei ihrer ersten Verwendung, stark an Spannung und müssen daher rasch nachgespannt werden.

Wird dieser anfänglich großen Längung durch eine entsprechend erhöhte Vorspannung entgegengewirkt, so endet dies in einem harten Lauf der Maschine. Es wird also überproportional viel Energie benötigt, um die Zustellsysteme zu bewegen. Zusätzlich erhöht sich der Verschleiß in den verwendeten Lagern, was wiederum zu einer verkürzten Lebensdauer der Zustellsysteme führt.

Ähnliche Probleme bestehen bei der Verwendung von Ketten. Diese müssen zwar nicht nach einer so kurzen Betriebszeit wie die Riemen nachgespannt werden, jedoch längen sich auch Ketten allgemein im Laufe der Zeit aufgrund von Verschleiß.

Weiterhin ergibt sich aufgrund der Entspannung des Zugmittels auf einer Seite der Nachteil, dass ein Antrieb durch beispielsweise ein Antriebsritzel nicht mehr verlässlich erfolgt. Ebenso ist es möglich, dass das Zugmittel aus einer Führung springt und somit ein ordnungsgemäßer Betrieb der Vibrationsschweißanlage nicht mehr gewährleistet ist. Um dies zu verhindern findet derzeit eine manuelle Nachjustierung des Zugmittels statt.

Eine gattungsgemäße Spannvorrichtung für Ketten ist in GB 204 121 A beschrieben. Die Kettenspannvorrichtung umfasst eine Spanneinheit mit mindestens einer Spannspindel und innerhalb der Einheit eine Dämpfungsfeder, die die Form eines Stapels von Tellerfedern aufweist. Die Tellerfedern können von ähnlicher Konstruktion sein und sie können in abwechselnden Richtungen angeordnet sein. Sie können ebenfalls in verschiedenen Schichten angeordnet sein, wobei die Schichten verschiedene Anzahlen von Tellerfedern aufweisen. Eine Überwachungsvorrichtung umfassend einen Bolzen, der in einem Schlitz verschoben werden kann und an der Spindel befestigt ist, zeigt die Vorspannkraft der Vorrichtung an. Zwei Spindeln können bereitgestellt werden, die entgegengesetzten Gewindegänge aufweisen und mit einer gemeinsamen Vorspannmutter zusammenarbeiten, um die übliche Doppelanordnung bereitzustellen.

Ein anderes Beispiel eines Zugmittelspanners wird in JP S58 196355 offenbart.

Es ist daher die Aufgabe der vorliegenden Erfindung einen Zugmittelspanner bereitzustellen, mit dem eine automatische Nachjustierung der Spannung des Zugmittels, insbesondere bei der Verwendung in Schweißanlagen, wie Vibrationsschweißanlagen, möglich ist. Darüber hinaus soll ein entsprechendes Herstellungsverfahren für einen entsprechenden Zugmittelspanner angegeben werden.

Die objektive technische Aufgabe der vorliegenden Erfindung wird gelöst durch einen Zugmittelspanner gemäß Patentanspruch 1 oder 3, die Verwendung eines Zugmittelspanner gemäß Patentanspruch 7, eine Schweißanlage gemäß Patentanspruch 9, ein Herstellungsverfahren eines Zugmittelspanner gemäß Patentanspruch 18 oder 19, ein Umrüstverfahren einer Schweißanlage gemäß Patentanspruch 20 sowie ein Spannverfahren für ein Zugmittel gemäß Patentanspruch 22. Weitere vorteilhafte Ausführungsformen ergeben sich aus der nachfolgenden Beschreibung, den Zeichnungen sowie den abhängigen Patentansprüchen.

Der erfindungsgemäße Zugmittelspanner, mit dem ein Zugmittel spannbar ist, das mindestens ein erstes und ein zweites Ende aufweist, vorzugsweise nur zwei Enden, umfasst ein erstes Befestigungsmittel, das einen ersten Befestigungsbereich aufweist, an dem das erste Ende des Zugmittels befestigbar ist, ein zweites Befestigungsmittel, das einen zweiten Befestigungsbereich aufweist, an dem das zweite Ende des Zugmittels befestigbar ist, und ein Verbindungsmittel, dass das erste und das zweite Befestigungsmittel derart miteinander verbindet, dass das erste und das zweite Befestigungsmittel relativ zueinander und zumindest einseitig begrenzt bewegbar sind, wobei das erste und das zweite Befestigungsmittel über mindestens ein Federelement relativ zueinander vorspannbar sind.

Zur besseren Verständlichkeit des erfindungsgemäßen Zugmittelspanners wird dieser nachfolgend bei der Verwendung in einer Vibrationsschweißanlage beschrieben. Hierbei ist der Einsatz des erfindungsgemäßen Zugmittelspanners jedoch nicht auf die Verwendung in einer Vibrationsschweißanlage beschränkt, sondern kann auch allgemein in Schweißanlagen verwendet werden sowie in allen Anlagen, in denen mittels eines Zugmittels eine Hin- und Herbewegung eines bewegbaren Bauteils der Anlage bewirkt werden soll.

Die beispielhafte Vibrationsschweißanlage weist einen Hubtisch auf, an dem der Zugmittelspanner angeordnet ist. Weiterhin umfasst die Vibrationsschweißanlage einen Schwingkopf, der am oberen Ende eines Maschinenrahmens angeordnet ist. Das erste Ende des Zugmittels ist mit dem ersten Befestigungsbereich des ersten Befestigungsmittels verbunden und das zweite Ende des Zugmittels ist mit dem zweiten Befestigungsbereich des zweiten Befestigungsmittels verbunden. Das Zugmittel verläuft vom ersten Befestigungsbereich des ersten Befestigungsmittels in Richtung des oberen Endes des Maschinenrahmens, wo das Zugmittel, vorzugsweise an einer Umlenkrolle, umgelenkt wird. Von dort läuft es in Richtung des unteren Endes des Maschinenrahmens zu einem Antriebsritzel, das über eine Welle mit einem Motor verbunden ist. Von dem Antriebsritzel läuft das Zugmittel wieder in Richtung des oberen Endes des Maschinenrahmens bis zum zweiten Befestigungsbereich des zweiten Befestigungsmittels. Da das erste und das zweite Befestigungsmittel über das Verbindungsmittel entweder mittelbar oder unmittelbar miteinander verbunden sind, sind auf diese Weise auch die beiden Enden des Zugmittels unter Zwischenschaltung des Zugmittelspanners miteinander verbunden. Mittels des über den Motor angetriebenen Antriebsritzels ist das Zugmittel antreibbar, so dass der Hubtisch vorzugsweise in vertikaler Richtung verfahrbar ist.

In dieser Ausführungsform wird der Zugmittelspanner mit einem Zugmittel verwendet, das eine vertikale Hin- und Herbewegung ermöglicht. Hierbei ist zu beachten, dass der erfindungsgemäße Zugmittelspanner nicht nur mit einem Zugmittel verwendet werden kann, das eine vertikale Hin- und Herbewegung ermöglicht, sondern mit jedem Zugmittel, das eine Hin- und Herbewegung eines zu bewegenden Bauteils realisiert, egal in welcher Richtung.

Um nun vor dem Betrieb der Vibrationsschweißanlage eine geeignete Spannung des Zugmittels einzustellen, sind das erste und das zweite Befestigungsmittel durch das Verbindungsmittel so direkt oder indirekt miteinander verbunden, dass das erste und das zweite Befestigungsmittel relativ zueinander bewegbar sind. In einer ersten Ausführungsform ist nur eines der beiden Befestigungsmittel bewegbar während das andere bezogen auf das Verbindungsmittel unbeweglich ist. In einer alternativen Ausführungsform sind beide Befestigungsmittel bezogen auf das Verbindungsmittel beweglich. In jedem Fall ist vorzugsweise die Bewegung des mindestens einen Befestigungsmittels begrenzt, so dass das Verbindungsmittel eine Auslenkung eines Endes des Zugmittels zumindest in eine Richtung limitiert.

Die gewünschte oder vorgebbare Spannung des Zugmittels wird mittels des mindestens einen Federelements erzeugt. Das mindestens eine Federelement ist dabei bevorzugt ausgewählt aus der Gruppe bestehend aus: Schraubenfeder, Spiralfeder, Blattfeder und Tellerfeder oder einer Kombination davon. Dabei erfüllt das mindestens eine Federelement auch die Aufgabe, die vorgegebene Spannung während eines Betriebs der Vibrationsschweißanlage aufrechtzuerhalten. Tritt beispielsweise eine Längung des Zugmittels während des Betriebs auf, dann verändert das mindestens eine Federelement die Position des ersten und des zweiten Befestigungsmittel und somit des ersten und des zweiten Endes des Zugmittels zueinander so, dass sich wieder die gewünschte Spannung am Zugmittel einstellt oder erhalten bleibt. Dies bedeutet, dass das mindestens eine Federelement entgegen einer Zugrichtung des Zugmittels vorgespannt ist. Durch das mindestens eine Federelement wird also eine Kraft in einer ersten Richtung auf eines der Befestigungsmittel aufgebracht, die entgegengesetzt einer durch das entsprechende Ende des Zugmittels auf das jeweilige Befestigungsmittel in einer der ersten Richtung entgegengesetzten zweiten Richtung aufgebrachten Kraft wirkt. Beispielsweise kann das mindestens eine Federelement dem zweiten Befestigungsmittel zugeordnet sein. Das Zugelement bringt eine Kraft auf das zweite Befestigungsmittel über den zweiten Befestigungsbereich auf, der das zweite Befestigungsmittel weg vom Verbindungsmittel zieht. Das mindestens eine Federelement wirkt dieser Kraft entgegen und zieht das zweite Befestigungsmittel hin zum Verbindungsmittel bzw. hin zum ersten Befestigungsmittel, wodurch das Zugmittel im Betrieb die gewünschte Spannung beibehält und die beiden Befestigungsmittel relativ zueinander vorgespannt sind.

Ein Vorteil des erfindungsgemäß bevorzugten Zugmittelspanners ist daher, dass das Zugmittel flexibel gespannt werden kann. Weiterhin kann der Zugmittelspanner variabel ausgelegt werden. Er kann also mit einer Vielzahl unterschiedlicher Zugmittelarten und -größen verwendet werden, so dass er besonders wirtschaftlich ist. Zudem verfügt der erfindungsgemäß bevorzugte Zugmittelspanner über eine kompakte Bauform und ist insbesondere nicht wesentlich breiter als das Zugmittel selbst.

Gemäß einer bevorzugten Ausführungsform ist das mindestens eine Federelement benachbart zum zweiten Befestigungsmittel angeordnet ist und das zweite Befestigungsmittel weist einen Sicherungsbereich auf, der im Verbindungsmittel angeordnet ist. Alternativ kann das mindestens eine Federelement auch dem ersten Befestigungsmittel zugeordnet sein. Wichtig ist in jeder dieser Ausführungsformen, dass durch die Zuordnung bzw. benachbarte Anordnung des mindestens einen Federelements zu einem der Befestigungsmittel das jeweilige Befestigungsmittel relativ zum Verbindungsmittel bewegbar ist. Im ersten bevorzugten Fall ist daher das zweite Befestigungsmittel relativ zum Verbindungsmittel bewegbar.

Weiterhin rutscht bei einem Versagen des mindestens einen Federelements das entsprechende Befestigungsmittel nicht durch einen Zug des Zugmittels aus dem Verbindungsmittel heraus. Dies wird durch die Anordnung des Sicherungsbereichs des Befestigungsmittels im Verbindungsmittel erreicht, das benachbart zum mindestens einen Federelement angeordnet ist. Im ersten bevorzugten Fall ist dies ebenso das zweite Befestigungsmittel. Der Sicherungsbereich sorgt für eine formschlüssige Verbindung des entsprechenden Befestigungsmittels mit dem Verbindungsmittel. Insbesondere bei einem Versagen des Federelements sorgt der Sicherungsbereich mit der formschlüssigen Verbindung zum Verbindungsmittel dafür, dass sich das entsprechende Befestigungsmittel nicht in einer Zugrichtung des Zugmittels aus dem Verbindungsmittel lösen kann. Dementsprechend ist in einem solchen Fall auch das entsprechende Ende des Zugmittels weiterhin mit dem Verbindungsmittel verbunden. Somit ist beispielsweise die Vibrationsschweißanlage zumindest in einem Notbetrieb in eine Position verfahrbar, in der ein Austausch des mindestens einen Federelements problemlos möglich ist.

Zusätzlich oder alternativ ist eine Überwachung des Federelements oder des benachbart dazu angeordneten Befestigungsmittels mittels Sensoren möglich. Auf diese Weise ist ein Betrieb des Zugmittelspanners in einem Belastungsgrenzbereich frühzeitig erkennbar, so dass geeignete Maßnahmen, wie ein Anhalten der beispielhaften Vibrationsschweißanlage und/oder ein Austausch des Federelements durch ein Federelement mit den gleichen oder anderen Eigenschaften, ergriffen werden können.

In einer besonders bevorzugten Ausgestaltung, gerade in Bezug auf die oben beschriebene Ausführungsform, ist das erste Befestigungsmittel bezogen auf das Verbindungsmittel unbeweglich. Dies gilt insbesondere dann, wenn das mindestens eine Federelement benachbart zum zweiten Befestigungsmittel angeordnet ist. Sollte das mindestens eine Federelement benachbart zum ersten Befestigungsmittel angeordnet sein, dann ist das zweite Befestigungsmittel unbeweglich bezogen auf das Verbindungsmittel angeordnet. Mit dieser Anordnung eines beweglichen und eines unbeweglichen Befestigungsmittels bezogen auf das Verbindungsmittel kann eine Spannung des Zugmittels besonders effizient eingestellt werden.

Ebenso bevorzugt ist, dass das Verbindungsmittel das erste und das zweite Befestigungsmittel so miteinander verbindet, dass der erste Befestigungsbereich des ersten Befestigungsmittels und der zweite Befestigungsbereich des zweiten Befestigungsmittels in entgegengesetzten axialen Richtungen ausgerichtet sind. Auf diese Weise kann insbesondere ein Endloszugmittel durch ein Zugmittel mit zwei Enden ersetzt werden, ohne an der übrigen Konstruktion der beispielhaften Vibrationsschweißanlage viel zu ändern. Dies gilt entsprechend für alle Anlagen, in denen das Zugmittel zum Hin- und Herbewegen eines Elements bzw. Bauteils verwendet wird.

Weiterhin bevorzugt ist, dass das Verbindungsmittel einen Stellbereich aufweist, insbesondere ein Gewinde, so dass ein anfänglicher Abstand zwischen dem ersten und dem zweiten Befestigungsbereich vorgebbar ist. Mittels des Stellbereichs ist vor dem Befestigen eines jeweiligen Endes des Zugmittels am entsprechenden ersten und zweiten Befestigungsbereich eine anfängliche Position der beiden Befestigungsmittel zueinander einstellbar. Dies gilt insbesondere für einen anfänglichen Abstand zwischen den beiden Befestigungsbereichen, wenn die beiden Befestigungsmittel durch das Verbindungsmittel in entgegengesetzter axialer Richtung ausgerichtet sind. Wie oben beschrieben findet im Betrieb der beispielhaften Vibrationsschweißanlage bei einer Längung des Zugmittels eine automatische Nachführung der gewünschten bzw. vorgegebenen Spannung aufgrund des mindestens einen Federelements statt. Um die einfache Bedienbarkeit der Anlage jedoch weiter zu erhöhen, wird mit dieser Ausführungsform ein Mittel bereitgestellt, durch das die Vorspannung des Zugmittels zusätzlich auch manuell nachführbar bzw. einstellbar ist. Somit ist es ohne großen Aufwand möglich, neben dem automatischen Nachführen der Spannung des Zugmittels auch eine manuelle Einstellung der Vorspannung ohne Komponentenaustausch vorzunehmen.

In einer ersten erfindungsgemäßen Alternative umfasst das mindestens eine Federelement mindestens zwei Schraubenfederelemente, die mit einem ersten axialen Ende am zweiten Befestigungsbereich und mit einem zweiten axialen Ende am Verbindungsmittel angeordnet sind, so dass das erste und das zweite Befestigungsmittel relativ zueinander vorspannbar sind. Mittels der mindestens zwei Schraubenfederelemente wird die gewünschte Vorspannung des Zugmittels vorgegeben, beispielsweise durch die entsprechende Wahl des Materials der Schraubenfederelemente, des Gewindegangs oder anderer Eigenschaften. Ein besonderer Vorteil liegt dann vor, wenn die Schraubenfederelemente von außen zugänglich am Verbindungsmittel sowie am zweiten Befestigungsmittel angeordnet sind. Im Falle eines Versagens der Schraubenfederelemente sind diese dann jederzeit einfach austauschbar.

In einer zweiten erfindungsgemäßen Alternative ist das mindestens eine Federelement eine Tellerfeder, die um das zweite Befestigungselement zwischen einem Sicherungsbereich des zweiten Befestigungselements und einer Öffnung im Verbindungsmittel angeordnet ist, so dass das erste und das zweite Befestigungsmittel relativ zueinander vorspannbar sind. Diese Anordnung ähnelt vom Prinzip her einer Kolben-Zylinderanordnung wie bei einem Stoßdämpfer, wobei das zweite Befestigungsmittel den Kolben und das Verbindungsmittel den Zylinder darstellt. Der Sicherungsbereich des zweiten Befestigungsmittels ist im Verbindungsmittel angeordnet und das zweite Befestigungsmittel steht durch das Verbindungsmittel durch eine Öffnung hervor, so dass mindestens der Befestigungsbereich des zweiten Befestigungsmittels frei zugänglich ist. Die Tellerfeder ist zwischen dem Sicherungsbereich und der Öffnung des Verbindungsmittels angeordnet, durch die das zweite Befestigungsmittel hervorsteht. Bei dieser Ausführungsform ist besonders vorteilhaft, dass die Tellerfeder geschützt angeordnet ist und sich eine besondere Kompaktheit des Zugmittelspanners ergibt. Vorzugsweise wird eine gerade Mehrzahl an Tellerfedern verwendet, die wechselweise mit ihrer Ober- und Unterseite zueinander angeordnet sind.

Ein Zugmittelspanner, der umfasst: ein erstes Befestigungsmittel, das einen ersten Befestigungsbereich aufweist, an dem das erste Ende des Zugmittels befestigbar ist, ein zweites Befestigungsmittel, das einen zweiten Befestigungsbereich aufweist, an dem das zweite Ende des Zugmittels befestigbar ist, und ein Verbindungsmittel, dass das erste und das zweite Befestigungsmittel derart miteinander verbindet, dass das erste und das zweite Befestigungsmittel relativ zueinander und zumindest einseitig begrenzt bewegbar sind, wobei das erste und das zweite Befestigungsmittel über mindestens ein Federelement relativ zueinander vorspannbar sind, wird in einer erfindungsgemäßen Schweißanlage, insbesondere in einer Vibrationsschweißanlage, einer Infrarotschweißanlage, einer Heizspiegelschweißanlage oder in Kombinationen davon verwendet. Hierbei ist es besonders vorteilhaft, wenn als Zugmittel eine Kette oder ein Riemen verwendet wird. Die jeweiligen Vorteile ergeben sich aus der obigen Beschreibung des erfindungsgemäßen Zugmittelspanner und werden daher an dieser Stelle nicht wiederholt.

Eine erfindungsgemäße Schweißanlage, insbesondere eine Vibrationsschweißanlage, umfasst ein bewegbar angeordnetes Element, insbesondere einen Hubtisch, ein Zugmittel zum Verfahren des bewegbar angeordnetes Elements, insbesondere zum beweglichen Verfahren des Hubtischs, und einen Zugmittelspanner. Der Zugmittelspanner umfasst: ein erstes Befestigungsmittel, das einen ersten Befestigungsbereich aufweist, an dem das erste Ende des Zugmittels befestigbar ist, ein zweites Befestigungsmittel, das einen zweiten Befestigungsbereich aufweist, an dem das zweite Ende des Zugmittels befestigbar ist, und ein Verbindungsmittel, dass das erste und das zweite Befestigungsmittel derart miteinander verbindet, dass das erste und das zweite Befestigungsmittel relativ zueinander und zumindest einseitig begrenzt bewegbar sind, wobei das erste und das zweite Befestigungsmittel über mindestens ein Federelement relativ zueinander vorspannbar sind. Vorzugsweise ist der Zugmittelspanner am bewegbar angeordneten Element, also insbesondere am Hubtisch, mittels des Verbindungsmittels angeordnet. Die Vorteile der Schweißanlage sowie deren Funktionsweise wurden bereits oben im Zusammenhang mit dem erfindungsgemäßen Zugmittelspanner beschrieben. Daher werden an dieser Stelle die Vorteile einer solchen Anordnung nicht wiederholt.

Das erfindungsgemäße Herstellungsverfahren eines Zugmittelspanners, insbesondere eines erfindungsgemäßen Zugmittelspanners, umfasst die Schritte: Bereitstellen eines ersten Befestigungsmittels, das einen ersten Befestigungsbereich aufweist, an dem ein erstes Ende eines Zugmittels befestigbar ist, Bereitstellen eines zweiten Befestigungsmittels, das einen zweiten Befestigungsbereich aufweist, an dem ein zweites Ende eines Zugmittels befestigbar ist, Bereitstellen eines Verbindungsmittels und Anordnen des ersten und des zweiten Befestigungsmittel am Verbindungsmittel derart, dass das erste und das zweite Befestigungsmittel relativ zueinander und zumindest einseitig begrenzt bewegbar sind, und Anordnen mindestens eines Federelements derart, dass das erste und das zweite Befestigungsmittel über das mindestens eine Federelement relativ zueinander vorspannbar sind. Gemäß einer ersten erfindungsgemäßen Alternative umfasst das mindestens eine Federelement mindestens zwei Schraubenfederelemente. In einer zweiten erfindungsgemäßen Alternative umfasst das mindestens eine Federelement mindestens ein Tellerfederelement. Im Hinblick auf die Vorteile des so hergestellten Zugmittelspanners wird auf die obigen Ausführungen zum erfindungsgemäßen Zugmittelspanner verwiesen.

Ein erfindungsgemäßes Umrüstverfahren einer Schweißanlage, insbesondere einer Vibrationsschweißanlage, umfasst die Schritte: Bereitstellen eines Zugmittelspanners, der umfasst: ein erstes Befestigungsmittel, das einen ersten Befestigungsbereich aufweist, an dem das erste Ende des Zugmittels befestigbar ist, ein zweites Befestigungsmittel, das einen zweiten Befestigungsbereich aufweist, an dem das zweite Ende des Zugmittels befestigbar ist, und ein Verbindungsmittel, dass das erste und das zweite Befestigungsmittel derart miteinander verbindet, dass das erste und das zweite Befestigungsmittel relativ zueinander und zumindest einseitig begrenzt bewegbar sind, wobei das erste und das zweite Befestigungsmittel über mindestens ein Federelement relativ zueinander vorspannbar sind, Auftrennen eines Endloszugmittels der Schweißanlage, insbesondere einer Endloskette oder eines Endlosriemens, so dass das Zugmittel zwei Enden aufweist, Verbinden des ersten Endes des Zugmittels mit dem ersten Befestigungsbereich des ersten Befestigungsmittels des Zugmittelspanners, Verbinden des zweiten Endes des Zugmittels mit dem zweiten Befestigungsbereich des zweiten Befestigungsmittels des Zugmittelspanners und Anordnen des Verbindungsmittels des Zugmittelspanners an der Schweißanlage, insbesondere an einem durch das Zugmittel bewegbaren Element der Schweißanlage. In einer bevorzugten Ausführungsform umfasst das Verfahren den weiteren Schritt: Einstellen einer Vorspannung des Zugmittels mittels Einstellen des Abstands zwischen dem ersten Befestigungsbereich des ersten Befestigungsmittel und dem zweiten Befestigungsbereich des zweiten Befestigungsmittel, insbesondere durch einen Stellbereich des Verbindungsmittel.

Mittels des erfindungsgemäßen Umrüstverfahrens kann jede beliebige Schweißanlage, die ein mittels eines Zugmittels bewegbar angeordnetes Element aufweist, mit dem neuen Zugmittelspanner ausgestattet werden. Die sich daraus ergebenden Vorteile wurden bereits im Zusammenhang mit dem erfindungsgemäßen Zugmittelspanner beschrieben, so dass diese hier nicht wiederholt werden.

Ein erfindungsgemäßes Spannverfahren für ein Zugmittel, das mindestens ein erstes und ein zweites Ende umfasst, weist die folgenden Schritte auf: Verbinden des ersten und des zweiten Endes des Zugmittels über ein Verbindungsmittel, so dass das erste und das zweite Ende des Zugmittels relativ zueinander zumindest einseitig begrenzt bewegbar sind, Anordnen von mindestens einem Federelement derart, dass das erste und das zweite Ende des Zugmittels relativ zueinander vorspannbar sind, und Verändern eines relativen Abstands zwischen dem ersten und dem zweiten Ende des Zugmittels, die über das Verbindungsmittel verbunden sind, derart, dass das Zugmittel über eine Federvorspannung zwischen dem ersten und dem zweiten Ende vorgespannt wird.

Mit dem erfindungsgemäßen Spannverfahren kann ein mit mindestens zwei Enden versehenes Zugmittel effektiv gespannt werden, insbesondere bei Verwendung des erfindungsgemäßen Zugmittelspanners. Im Hinblick auf die einzelnen Vorteile wird daher auf die obigen Ausführungen zum erfindungsgemäßen Zugmittelspanner verwiesen, um Wiederholungen zu vermeiden.

In einer bevorzugten Ausführungsform des Spannverfahrens umfasst der Schritt des Verbindens des ersten und des zweiten Endes des Zugmittels über ein Verbindungsmittel die Schritte: Verbinden des ersten Endes des Zugmittels mit einem ersten Befestigungsmittel, das mit dem Verbindungsmittel verbunden ist, Verbinden des zweiten Endes des Zugmittels mit einem zweiten Befestigungsmittel, das mit dem Verbindungsmittel verbunden ist, wobei das erste und das zweite Befestigungsmittel relativ zueinander und zumindest einseitig begrenzt bewegbar sind, so dass ein relativer Abstand zwischen dem ersten und dem zweiten Ende des Zugmittels einstellbar ist. Weiterhin bevorzugt ist, dass das erste und/oder das zweite Befestigungsmittel formschlüssig mit dem Verbindungsmittel verbunden ist, so dass eine Sicherung gegen ein Lösen des ersten und/oder zweiten Endes des Zugmittels von dem Verbindungsmittel gebildet ist, insbesondere in einer Zugrichtung des Zugmittels. Auch im Hinblick auf diese bevorzugten Ausführungsformen des Spannverfahrens wird auf die Ausführungen zum erfindungsgemäßen Zugmittelspanner verwiesen.

Im Folgenden wird die vorliegende Erfindung unter Bezugnahme auf die beigefügten Zeichnungen detailliert beschrieben. Gleiche Bezugszeichen in den Zeichnungen bezeichnen gleiche Bauteile bzw. Komponenten. Es zeigen:
- Fig. 1: eine Vibrationsschweißanlage mit einer ersten Ausführungsform eines erfindungsgemäßen Zugmittelspanner,
- Fig. 2: einen Ausschnitt der Vibrationsschweißanlage aus Fig. 1,
- Fig. 3: eine Schnittansicht der Vibrationsschweißanlage aus Fig. 2,
- Fig. 4: die erste Ausführungsform des erfindungsgemäßen Zugmittelspanners,
- Fig. 5: eine Schnittansicht des Zugmittelspanners aus Fig. 4,
- Fig. 6: eine zweite Ausfuhrungsform des erfindungsgemäßen Zugmittelspanners,
- Fig. 7: eine Schnittansicht des erfindungsgemäßen Zugmittelspanners aus Fig. 6,
- Fig. 8: einen schematischen Verfahrensablauf eines erfindungsgemäßen Herstellungsverfahrens eines Zugmittelspanner,
- Fig. 9: einen schematischen Verfahrensablauf eines erfindungsgemäßen Umrüstverfahrens und
- Fig. 10: einen schematischen Verfahrensablauf eines erfindungsgemäßen Spannverfahrens.

Der erfindungsgemäße Zugmittelspanner wird nachfolgend anhand der Verwendung in einer Vibrationsschweißanlage beschrieben. Diese Verwendung ist jedoch nicht beschränkend, da der erfindungsgemäße Zugmittelspanner in jeder beliebigen Anlage bzw. Vorrichtung eingesetzt werden kann, in der mittels eines Zugmittels eine Hin- und Herbewegung eines Bauteils bewirkt wird. Insbesondere kann ein Endloszugmittel, das ausschließlich eine Hin- und Herbewegung eines Bauteils bewirkt, durch ein Zugmittel mit zwei Enden in Verbindung mit dem erfindungsgemäßen Zugmittelspanner ersetzt werden.

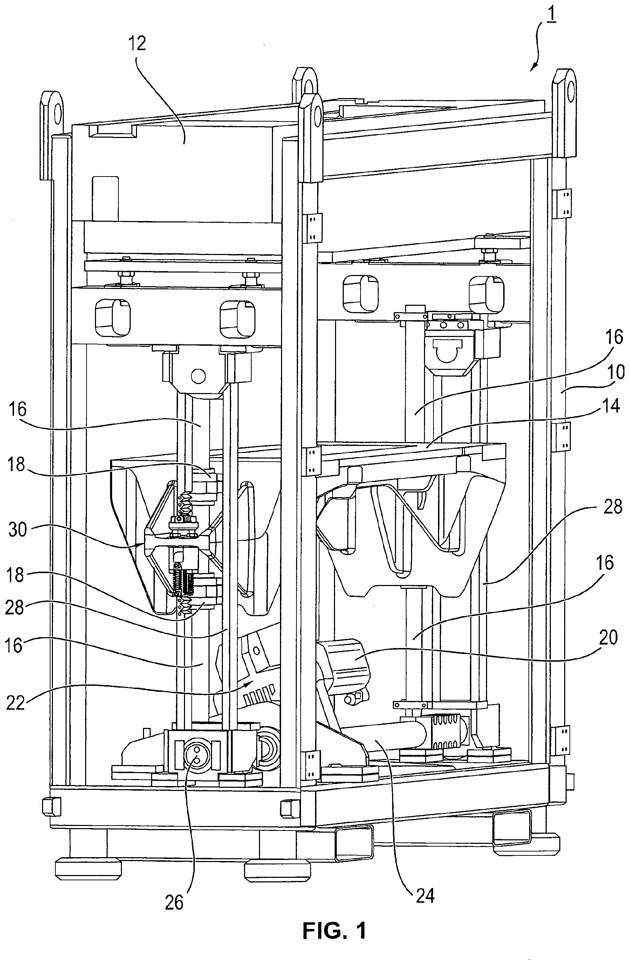

Nun Bezug nehmend auf Fig. 1 ist eine Vibrationsschweißanlage 1 dargestellt. Die Vibrationsschweißanlage 1 umfasst einen Maschinenrahmen 10 mit einem Schwingkopf 12 und einem Hubtisch 14. Der Hubtisch 14 wird über Säulen 16 und Lagerbuchsen 18 in vertikaler Richtung geführt. Während des Betriebs der Vibrationsschweißanlage 1 befindet sich auf dem Hubtisch 14 sowie am Schwingkopf 12 jeweils ein zu verschweißendes Werkstück. Zur Bewegung des Hubtischs 14 in Richtung des Schwingkopfs 12 und zur Kraftaufbringung auf die beiden zu verschweißenden Werkstücke während des Schweißprozesses selbst ist ein Motor 20 mit einem Getriebe 22 vorgesehen. Der Motor treibt über das Getriebe 22 eine Welle 24 an, wobei an der Welle 24 zwei Antriebsritzel 26 angeordnet sind. Jedes der Antriebsritzel 26 steht in Eingriff mit einem jeweiligen Zugmittel 28. Bei dem Zugmittel 28 kann es sich um eine Kette oder um einen Riemen, vorzugsweise einen Zahnriemen, handeln.

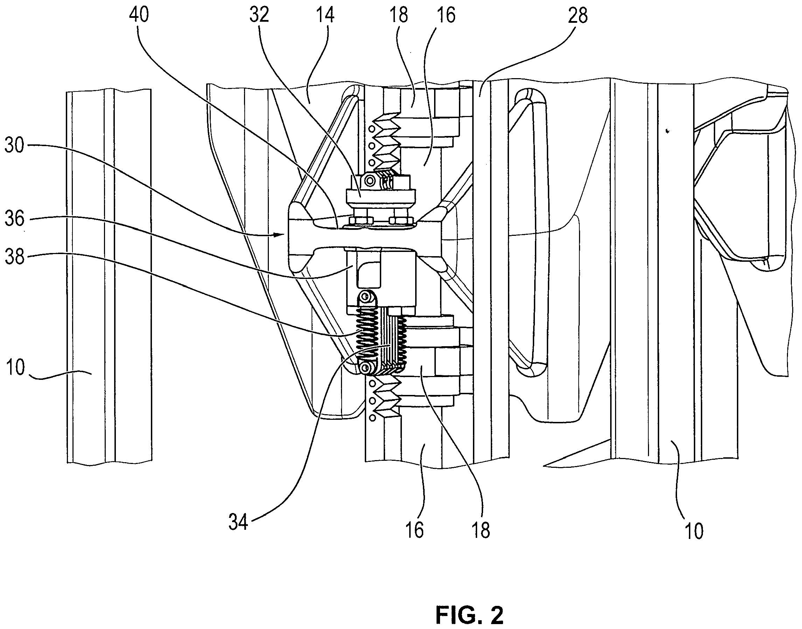

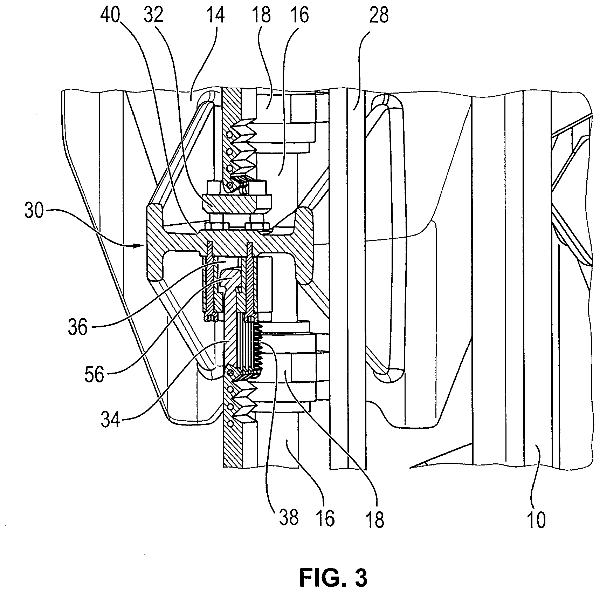

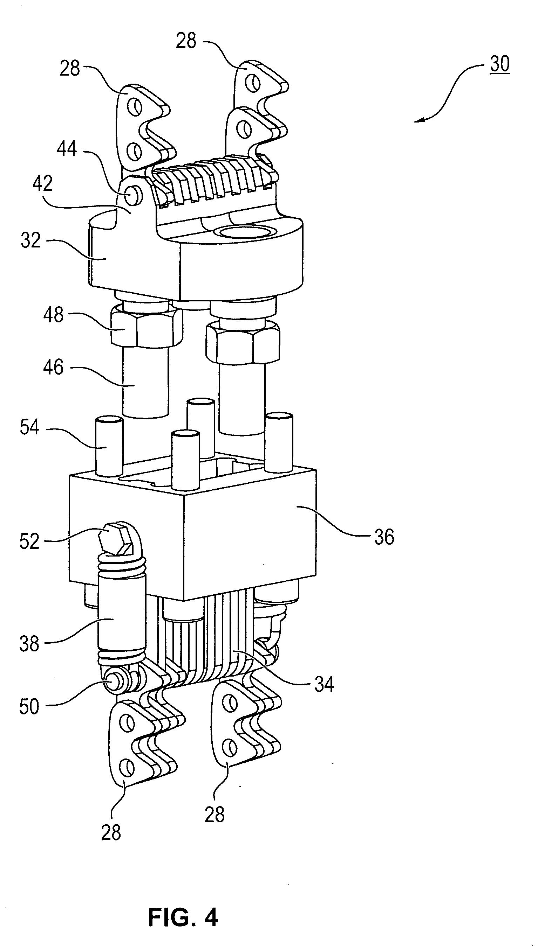

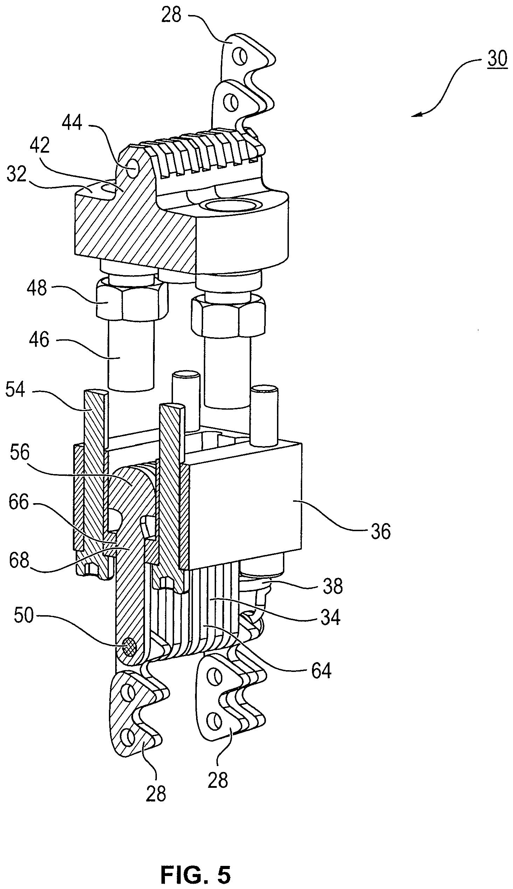

Weiterhin ist in Fig. 1 eine erste Ausführungsform der erfindungsgemäßen Zugmittelspanners 30 erkennbar. Nun Bezug nehmend auf die Fig. 2 bis 5 ist das Zugmittel 28 mit einem ersten Ende am ersten Befestigungsbereich 42 des ersten Befestigungsmittels 32 angeordnet. Diese Anordnung geschieht insbesondere über einen Befestigungsstift 44. Ebenso ist das zweite Ende des Zugmittels 28 am zweiten Befestigungsbereich des zweiten Befestigungsmittels 34 über einen Befestigungsstift 50 angeordnet. Das Verbindungsmittel weist in diesem Fall ein Aufnahmemittel 36, das im gezeigten Fall wiederum vier Schrauben 54 umfasst, sowie ein Haltemittel 40 auf. Auf der einen Seite des Haltemittels 40 ist das erste Befestigungsmittel 32 mittels der Schrauben 46 und der Kontermuttern 48 unbeweglich befestigt. Auf der gegenüberliegenden Seite des Haltemittels 40 ist das Aufnahmemittel 36 befestigt. Auf diese Weise wird über das Haltemittel 40 eine Verbindung zum Hubtisch 14 hergestellt.

Eine Bewegung des zweiten Befestigungsmittels 34 ist in einer ersten axialen Richtung somit durch das Haltemittel 40 und in einer zweiten axialen Richtung durch einen Sicherungsbereich 56 des zweiten Befestigungsmittels 34 in Kombination mit der Öffnung im Aufnahmeteil 36 begrenzt. Der Sicherungsbereich 56 bildet dabei eine formschlüssige Verbindung in Kombination mit der Öffnung 66 im Aufnahmeteil 36. Zu diesem Zweck zeigt der Sicherungsbereich 56 eine größere laterale Ausdehnung als ein sich daran anschließender Steg 68, der in seiner Breite an die Öffnung 66 im Aufnahmemittel 36 angepasst ist. Auf diese Weise ist das zweite Befestigungsmittel 34 axial beweglich zumindest teilweise im Aufnahmemittel 36 angeordnet und gehalten.

Bei Verwendung des Zugmittelspanners 30 wird die Spannung des Zugmittels 28 durch geeignete elastische Spannelemente, hier die Schraubenfedern 38 vorgegeben, die am zweiten Ende des Zugmittels bzw. dem zweiten Befestigungsbereich des zweiten Befestigungsmittels 34 und dem Aufnahmemittel 36 befestigt sind. Dazu sind am Aufnahmemittel 36 zwei Halterungen 52 für ein erstes axiales Ende der Schraubenfedern 38 vorgesehen. Das zweite axiale Ende der Schraubenfedern 38 ist am Befestigungsstift 50 angeordnet. Selbst im Fall des Versagens einer oder beider Spiralfedern 38 kann sich das Befestigungsmittel 34 daher nicht aus dem Aufnahmemittel 36 lösen, insbesondere herausrutschen bzw. herausgezogen werden.

Gemäß einer Alternative der Erfindung werden in dieser Ausführungsform Schraubenfedern verwendet, wobei natürlich auch andere Federelemente, die ein Spann- und Rückstellkraft erzeugen, denkbar sind. Die Federkraft der Federelemente ist dabei so zu wählen, dass zum Einen eine geeignete Spannung erzeugt wird. Auf der anderen Seite darf während des Schweißprozesses das Federelement auch nicht überlastet werden, so dass deren Spannung verloren geht.

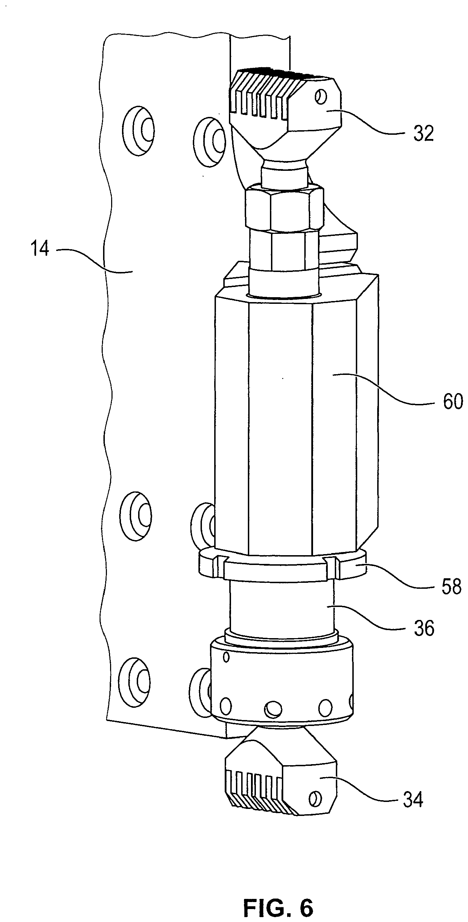

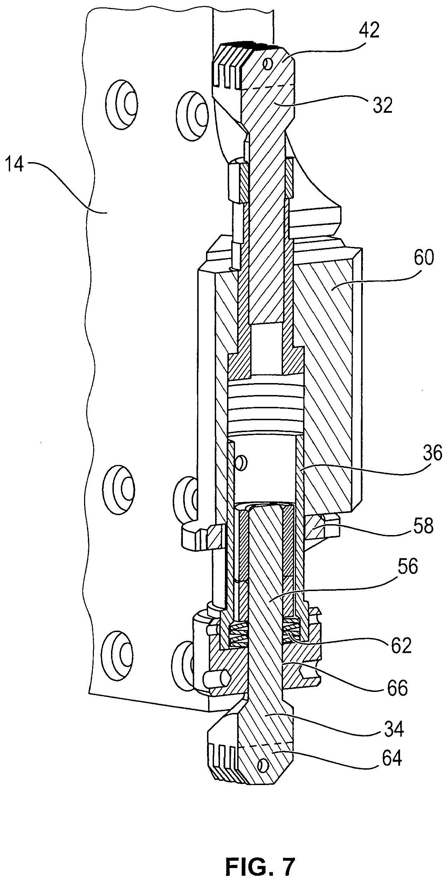

Eine alternative Ausführungsform ist in den Fig. 6 und 7 dargestellt. Hierbei verfügt das Verbindungsmittel über ein längliches Gehäuse 60 in dem das Aufnahmemittel 36 an der einen Seite und das erste Befestigungsmittel 32 an der gegenüberliegenden Seite angeordnet ist. Fig. 7 zeigt eine entsprechende Schnittansicht. Im Aufnahmemittel 36 sind zwischen einem Sicherungsbereich 56 des zweiten Befestigungsmittels 34 und einer Öffnung 66 des Aufnahmemittels 36 Tellerfedern 62 als Federelement angeordnet. Auch hier weist der Sicherungsbereich 56, analog zur oben beschriebenen ersten Ausführungsform, einen größeren Durchmesser als die Öffnung 66 auf. Das zweite Befestigungsmittel 34 tritt mit einem Bereich schmaleren Durchmessers, der sich an den Sicherungsbereich 56 anschließt, durch die Öffnung 66 hindurch, der dann in den zweiten Befestigungsbereich 64 über geht. Bei den Tellerfedern 62 handelt es sich um 4 Tellerfedern 62, die jeweils abwechselnd mit ihrer Ober- und ihrer Unterseite zueinander angeordnet sind.

Es ist erkennbar, dass das Aufnahmemittel 36 mittels eines Gewindes im Gehäuse 60 gehalten ist. Über das Gewinde im Gehäuse 60 kann ein relativer Abstand des ersten 42 und des zweiten Befestigungsbereichs 64 zueinander eingestellt werden, wodurch, wenn das Zugmittel 28 mit den jeweiligen Befestigungsbereichen 42, 64 verbunden ist, eine Vorspannung für das Zugmittel 28 einstellbar ist. Aus diesem Grund wird der mit Gewinde versehene Bereich auch als Stellbereich bezeichnet. Eine Position des Aufnahmemittels 36 im Gehäuse 60 wird über eine Kontermutter 58 fixiert. Somit ist eine Vorspannung einstellbar. Weiterhin kann auf diese Weise neben der automatischen Spannungserhaltung aufgrund der Tellerfedern 62 eine manuelle Nachjustierung der Vorspannung des Zugmittels 28 durch Lösen der Kontermutter 58, Anpassen des Abstands zwischen den beiden Befestigungsbereichen 42, 64 über den Stellbereich und Festziehen der Kontermutter 58 erfolgen.

Das erste Befestigungsmittel 32 kann zumindest teilweise im Gehäuse 60 form- und oder kraftschlüssig angeordnet sein, wie in Fig. 6 und 7 gezeigt. Beispielsweise kann es darin lose angeordnet sein, damit starr verbunden sein oder damit über das Gewinde verbunden sein. Aufgrund der Ausweitung des ersten Befestigungsmittels 32 am dem ersten Befestigungsbereich axial entgegengesetzten Ende kann das erste Befestigungsmittel nicht aus dem Gehäuse gezogen werden, insbesondere durch das Zugmittel.

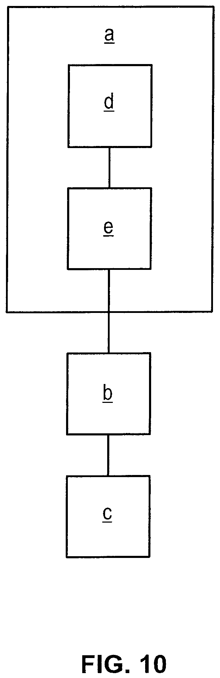

Das durch den Zugmittelspanner realisierte Spannverfahren lässt sich daher und Bezug nehmend auf Fig. 10 wie folgt beschreiben. In einem ersten Schritt a werden das erste und das zweite Ende des Zugmittels 28 über das Verbindungsmittel verbunden, so dass das erste und das zweite Ende des Zugmittels 28 relativ zueinander zumindest einseitig begrenzt bewegbar sind. Das Verbinden von Schritt a umfasst dabei zwei Schritte. In Schritt d wird das erste Ende des Zugmittels 28 mit dem ersten Befestigungsmittel 32 verbunden und in Schritt e wird das zweite Ende des Zugmittels 28 mit dem zweiten Befestigungsmittel 34 verbunden. Das erste 32 und das zweite Befestigungsmittel 34 sind mit dem Verbindungsmittel verbunden. Auf diese Weise sind das erste 32 und das zweite Befestigungsmittel 34 und damit auch das erste und das zweite Ende des Zugmittels 28 relativ zueinander und zumindest einseitig begrenzt bewegbar, so dass ein relativer Abstand zwischen dem ersten und dem zweiten Ende des Zugmittels 28 einstellbar ist. Die Schritte d und e sind dabei in beliebiger Reihenfolge ausführbar. Vorzugsweise ist das erste 32 und/oder das zweite Befestigungsmittel 34 formschlüssig mit dem Verbindungsmittel verbunden, so dass eine Sicherung gegen ein Lösen des ersten und/oder zweiten Endes des Zugmittels 28 von dem Verbindungsmittel gebildet ist, insbesondere in einer Zugrichtung des Zugmittels 28.

In Schritt b folgt das Anordnen von mindestens einem Federelement 38; 62 derart, dass das erste und das zweite Ende des Zugmittels 28 relativ zueinander vorspannbar sind. In einer ersten erfindungsgemäßen Alternative umfasst das mindestens eine Federelement mindestens zwei Schraubenfederelemente 38, wohingegen es in einer zweiten erfindungsgemäßen Alternative mindestens ein Tellerfederelement 62 aufweist. Schließlich erfolgt in Schritt c das Verändern eines relativen Abstands zwischen dem ersten und dem zweiten Ende des Zugmittels 28, die über das Verbindungsmittel verbunden sind, derart, dass das Zugmittel 28 über eine Federvorspannung zwischen dem ersten und dem zweiten Ende vorgespannt wird.

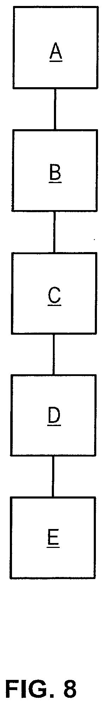

Das erfindungsgemäße Herstellungsverfahren eines Zugmittelspanners wird nun unter Bezugnahme auf Fig. 8 erläutert. In einem Schritt A wird das erste Befestigungsmittel bereitgestellt, das den ersten Befestigungsbereich aufweist, an dem das erste Ende des Zugmittels befestigbar ist. In Schritt B wird das zweite Befestigungsmittel bereitgestellt, das einen zweiten Befestigungsbereich aufweist, an dem das zweite Ende des Zugmittels befestigbar ist. In Schritt C erfolgt das Bereitstellen eines Verbindungsmittels. Die Schritte A bis C können dabei in beliebiger Reihenfolge ausgeführt werden.

Das Anordnen des ersten und des zweiten Befestigungsmittels am Verbindungsmittel erfolgt in Schritt D derart, dass das erste und das zweite Befestigungsmittel relativ zueinander und zumindest einseitig begrenzt bewegbar sind. Weiterhin erfolgt in Schritt E das Anordnen des mindestens einen Federelements derart, dass das erste und das zweite Befestigungsmittel über das mindestens eine Federelement relativ zueinander vorspannbar sind. In einer ersten erfindungsgemäßen Alternative umfasst das mindestens eine Federelement mindestens zwei Schraubenfederelemente 38, wohingegen es in einer zweiten erfindungsgemäßen Alternative mindestens ein Tellerfederelement 62 aufweist. Auf diese Weise wird der erfindungsgemäße Zugmittelspanner hergestellt, wodurch er alle oben beschriebenen Vorteile aufweist.

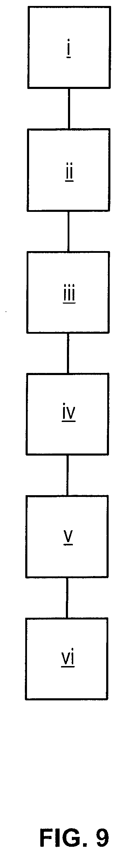

Nun Bezug nehmend auf Fig. 9 wird das erfindungsgemäße Umrüstverfahren beschrieben. In Schritt i wird ein Zugmittelspanner bereitgestellt. Der Zugmittelspanner umfasst: ein erstes Befestigungsmittel, das einen ersten Befestigungsbereich aufweist, an dem das erste Ende des Zugmittels befestigbar ist, ein zweites Befestigungsmittel, das einen zweiten Befestigungsbereich aufweist, an dem das zweite Ende des Zugmittels befestigbar ist, und ein Verbindungsmittel, dass das erste und das zweite Befestigungsmittel derart miteinander verbindet, dass das erste und das zweite Befestigungsmittel relativ zueinander und zumindest einseitig begrenzt bewegbar sind, wobei das erste und das zweite Befestigungsmittel über mindestens ein Federelement relativ zueinander vorspannbar sind. Das Auftrennen des Zugmittels der Schweißanlage, insbesondere einer Endloskette oder eines Endlosriemens, so dass das Zugmittel zwei Enden aufweist, erfolgt in Schritt ii. Die Reihenfolge der beiden Schritte i und ii ist dabei beliebig.

Nun erfolgt in Schritt iii das Verbinden des ersten Endes des Zugmittels mit dem ersten Befestigungsbereich des ersten Befestigungsmittels des Zugmittelspanners und in Schritt iv das Verbinden des zweiten Endes des Zugmittels mit dem zweiten Befestigungsbereich des zweiten Befestigungsmittels des Zugmittelspanners. Weiterhin wird in Schritt v das Verbindungsmittel des Zugmittelspanners an der Schweißanlage, insbesondere an einem durch das Zugmittel bewegbaren Element der Schweißanlage, angeordnet. Die Reihenfolge der Schritte iii bis v ist ebenfalls beliebig. Vorzugsweise erfolgt als letzter Schritt vi das Einstellen der Vorspannung des Zugmittels mittels Einstellen des Abstands zwischen dem ersten Befestigungsbereich des ersten Befestigungsmittels und dem zweiten Befestigungsbereich des zweiten Befestigungsmittels, insbesondere über den Stellbereich des Verbindungsmittels. Auf diese Weise wird eine herkömmliche Schweißanlage mit dem neuen Zugmittelspanner ausgestattet und weist daher alle oben beschriebenen Vorteile auf.

## Patentansprüche

1. Ein Zugmittelspanner (30), mit dem ein Zugmittel (28) spannbar ist, das mindestens ein erstes und ein zweites Ende aufweist, vorzugsweise nur zwei Enden, umfassend
a) ein erstes Befestigungsmittel (32), das einen ersten Befestigungsbereich (42) aufweist, an dem das erste Ende des Zugmittels (28) befestigbar ist,
b) ein zweites Befestigungsmittel (34), das einen zweiten Befestigungsbereich (64) aufweist, an dem das zweite Ende des Zugmittels (28) befestigbar ist, und
c) ein Verbindungsmittel, dass das erste (32) und das zweite Befestigungsmittel (34) derart miteinander verbindet, dass das erste (32) und das zweite Befestigungsmittel (34) relativ zueinander und zumindest einseitig begrenzt bewegbar sind, wobei das Verbindungsmittel ein Aufnahmemittel (36), in dem das zweite Befestigungsmittel (34) zumindest teilweise angeordnet ist, und ein Haltemittel (40) für eine Verbindung zu einem bewegbar angeordneten Element, insbesondere einem Hubtisch (14), aufweist, wobei
d) das erste (32) und das zweite Befestigungsmittel (34) über mindestens zwei Schraubenfederelemente (38) relativ zueinander vorspannbar sind, wobei die mindestens zwei Schraubenfederelemente (38) mit einem ersten axialen Ende an der Außenseite des Aufnahmemittels (36) und mit einem zweiten axialen Ende an einem zweiten Befestigungsbereich (64) des zweiten Befestigungsmittels (34) angeordnet sind und das zweite Befestigungsmittel (34) umfasst einen Sicherungsbereich (56), der im Verbindungsmittel angeordnet ist, und
e) das erste Befestigungsmittel (32) ist bezogen auf das Verbindungsmittel unbeweglich.

2. Zugmittelspanner (30) gemäß Patentanspruch 1, wobei das Verbindungsmittel das erste (32) und das zweite Befestigungsmittel (34) so verbindet, dass der erste Befestigungsbereich (42) des ersten Befestigungsmittels (32) und der zweite Befestigungsbereich (64) des zweiten Befestigungsmittels (34) in entgegengesetzte axiale Richtungen ausgerichtet sind.

3. Ein Zugmittelspanner (30), mit dem ein Zugmittel (28) spannbar ist, das mindestens ein erstes und ein zweites Ende aufweist, vorzugsweise nur zwei Enden, umfassend
a) ein erstes Befestigungsmittel (32), das einen ersten Befestigungsbereich (42) aufweist, an dem das erste Ende des Zugmittels (28) befestigbar ist,
b) ein zweites Befestigungsmittel (34), das einen zweiten Befestigungsbereich (64) aufweist, an dem das zweite Ende des Zugmittels (28) befestigbar ist, und
c) ein Verbindungsmittel, dass das erste (32) und das zweite Befestigungsmittel (34) derart miteinander verbindet, dass das erste (32) und das zweite Befestigungsmittel (34) relativ zueinander und zumindest einseitig begrenzt bewegbar sind, wobei das Verbindungsmittel ein längliches Gehäuse (60) für eine Verbindung zu einem bewegbar angeordneten Element, insbesondere einem Hubtisch (14), aufweist, in dem ein Aufnahmemittel (36) an der einen Seite und das erste Befestigungsmittel (32) an der gegenüberliegenden Seite angeordnet ist und das zweite Befestigungsmittel (34) ist zumindest teilweise im Aufnahmemittel (36) angeordnet, wobei
d) das erste (32) und das zweite Befestigungsmittel (34) über mindestens ein Tellerfederelement (62) relativ zueinander vorspannbar sind, wobei das mindestens eine Tellerfederelement (62) um das zweite Befestigungsmittel (34) zwischen einem Sicherungsbereich (56) des zweiten Befestigungsmittels (34), der im Aufnahmemittel (36) angeordnet ist, und einer Öffnung im Verbindungsmittel angeordnet ist.

4. Zugmittelspanner (30) gemäß Patentanspruch 3, wobei das erste Befestigungsmittel (32) bezogen auf das Verbindungsmittel unbeweglich angeordnet ist.

5. Zugmittelspanner (30) gemäß einem der vorhergehenden Patentansprüche 3 oder 4, wobei das Verbindungsmittel das erste (32) und das zweite Befestigungsmittel (34) so verbindet, dass der erste Befestigungsbereich (42) des ersten Befestigungsmittels (32) und der zweite Befestigungsbereich (64) des zweiten Befestigungsmittels (34) in entgegengesetzte axiale Richtungen ausgerichtet sind.

6. Zugmittelspanner (30) gemäß einem der vorhergehenden Patentansprüche 3 bis 5, wobei das Verbindungsmittel einen Stellbereich aufweist, insbesondere ein Gewinde, so dass eine Position des ersten (42) und des zweiten Befestigungsbereichs (64) relativ zueinander einstellbar ist, insbesondere ein Abstand zwischen dem ersten (42) und dem zweiten Befestigungsbereich (64).

7. Verwendung eines Zugmittelspanners (30) mit dem ein Zugmittel (28) spannbar ist, das mindestens ein erstes und ein zweites Ende aufweist, vorzugsweise nur zwei Enden, umfassend
a) ein erstes Befestigungsmittel (32), das einen ersten Befestigungsbereich (42) aufweist, an dem das erste Ende des Zugmittels (28) befestigbar ist,
b) ein zweites Befestigungsmittel (34), das einen zweiten Befestigungsbereich (64) aufweist, an dem das zweite Ende des Zugmittels (28) befestigbar ist, und
c) ein Verbindungsmittel, dass das erste (32) und das zweite Befestigungsmittel (34) derart miteinander verbindet, dass das erste (32) und das zweite Befestigungsmittel (34) relativ zueinander und zumindest einseitig begrenzt bewegbar sind, wobei
d) das erste (32) und das zweite Befestigungsmittel (34) über mindestens ein Federelement (38; 62) relativ zueinander vorspannbar sind
in einer Schweißanlage, insbesondere in einer Vibrationsschweißanlage (1), einer Infrarotschweißanlage, einer Heizspiegelschweißanlage oder in Kombinationen davon.

8. Verwendung eines Zugmittelspanner (30) gemäß Patentanspruch 7, wobei der Zugmittelspanner (30) mit einer Kette oder einem Riemen als Zugmittel (28) verwendet wird.

9. Schweißanlage, insbesondere Vibrationsschweißanlage (1), mit
a) einem bewegbar angeordneten Element, insbesondere einem Hubtisch (14),
b) einem Zugmittel (28) zum Bewegen des bewegbar angeordneten Elements, insbesondere zum hubbeweglichen Verfahren des Hubtischs (14), und
c) einem Zugmittelspanner (30) mit dem ein Zugmittel (28) spannbar ist, das mindestens ein erstes und ein zweites Ende aufweist, vorzugsweise nur zwei Enden, umfassend
a) ein erstes Befestigungsmittel (32), das einen ersten Befestigungsbereich (42) aufweist, an dem das erste Ende des Zugmittels (28) befestigbar ist,
b) ein zweites Befestigungsmittel (34), das einen zweiten Befestigungsbereich (64) aufweist, an dem das zweite Ende des Zugmittels (28) befestigbar ist, und
c) ein Verbindungsmittel, dass das erste (32) und das zweite Befestigungsmittel (34) derart miteinander verbindet, dass das erste (32) und das zweite Befestigungsmittel (34) relativ zueinander und zumindest einseitig begrenzt bewegbar sind, wobei
d) das erste (32) und das zweite Befestigungsmittel (34) über mindestens ein Federelement (38; 62) relativ zueinander vorspannbar sind,
der über den ersten Befestigungsbereich (42) mit dem ersten Ende des Zugmittels (28) und über den zweiten Befestigungsbereich (64) mit dem zweiten Ende des Zugmittels (28) verbunden ist.

10. Schweißanlage gemäß Patentanspruch 9, wobei der Zugmittelspanner (30) am bewegbar angeordneten Element, insbesondere am Hubtisch (14), mittels des Verbindungsmittels angeordnet ist.

11. Schweißanlage gemäß einem der Patentansprüche 9 oder 10, wobei das mindestens eine Federelement (38; 62) benachbart zum zweiten Befestigungsmittel (34) angeordnet ist und das zweite Befestigungsmittel (34) einen Sicherungsbereich (56) aufweist, der im Verbindungsmittel angeordnet ist.

12. Schweißanlage gemäß einem der Patentansprüche 9 bis 11, wobei das erste Befestigungsmittel (32) bezogen auf das Verbindungsmittel unbeweglich angeordnet ist.

13. Schweißanlage gemäß einem der Patentansprüche 9 bis 12, wobei das Verbindungsmittel das erste (32) und das zweite Befestigungsmittel (34) so verbindet, dass der erste Befestigungsbereich (42) des ersten Befestigungsmittels (32) und der zweite Befestigungsbereich (64) des zweiten Befestigungsmittels (34) in entgegengesetzte axiale Richtungen ausgerichtet sind.

14. Schweißanlage gemäß einem der Patentansprüche 9 bis 13, wobei das Verbindungsmittel einen Stellbereich aufweist, insbesondere ein Gewinde, so dass eine Position des ersten (42) und des zweiten Befestigungsbereichs (64) relativ zueinander einstellbar ist, insbesondere ein Abstand zwischen dem ersten (42) und dem zweiten Befestigungsbereich (64).

15. Schweißanlage gemäß einem der Patentansprüche 9 bis 14, wobei das mindestens eine Federelement (38; 62) ausgewählt ist aus der Gruppe bestehend aus: Schraubenfeder (38), Spiralfeder, Blattfeder und Tellerfeder (62) oder einer Kombination davon.

16. Schweißanlage gemäß einem der Patentansprüche 9 bis 15, wobei das mindestens eine Federelement (38) eine Schraubenfeder ist, die mit einem ersten axialen Ende am zweiten Befestigungsmittel (34), insbesondere am zweiten Befestigungsbereich (64), und mit einem zweiten axialen Ende am Verbindungsmittel angeordnet ist, so dass das erste (32) und das zweite Befestigungsmittel (34) relativ zueinander vorspannbar sind.

17. Schweißanlage gemäß einem der Patentansprüche 9 bis 15, wobei das mindestens eine Federelement (62) eine Tellerfeder ist, die um das zweite Befestigungsmittel (34) zwischen einem Sicherungsbereich (56) des zweiten Befestigungsmittels (34) und einer Öffnung im Verbindungsmittel angeordnet ist, so dass das erste (32) und das zweite Befestigungsmittel (34) relativ zueinander vorspannbar sind.

18. Herstellungsverfahren eines Zugmittelspanners, insbesondere eines Zugmittelspanners (30) gemäß einem der Patentansprüche 1 oder 2, wobei das Herstellungsverfahren die Schritte umfasst:
a) Bereitstellen (A) eines ersten Befestigungsmittels (32), das einen ersten Befestigungsbereich (42) aufweist, an dem ein erstes Ende eines Zugmittels (28) befestigbar ist,
b) Bereitstellen (B) eines zweiten Befestigungsmittels (34), das einen zweiten Befestigungsbereich (64) aufweist, an dem ein zweites Ende eines Zugmittels (28) befestigbar ist,
c) Bereitstellen (C) eines Verbindungsmittel umfassend ein Aufnahmemittel (36), in dem das zweite Befestigungsmittel (34) zumindest teilweise aufgenommen ist, und ein Haltemittel (40) für eine Verbindung zu einem bewegbar angeordneten Element, insbesondere einem Hubtisch (14), und Anordnen (D) des ersten (32) und des zweiten Befestigungsmittels (34) am Verbindungsmittel derart, dass das erste (32) und das zweite Befestigungsmittel (34) relativ zueinander und zumindest einseitig begrenzt bewegbar sind, wobei das erste Befestigungsmittel (32) bezogen auf das Verbindungsmittel unbeweglich ist, und das zweite Befestigungsmittel (34) umfasst einen Sicherungsbereich (56), der im Verbindungsmittel angeordnet ist, und
d) Anordnen (E) von mindestens zwei Schraubenfederelementen (38) mit einem ersten axialen Ende an der Außenseite des Aufnahmemittels (36) und mit einem zweiten axialen Ende an einem zweiten Befestigungsbereich (64) des zweiten Befestigungsmittels (34) derart, dass das erste (32) und das zweite Befestigungsmittel (34) über die mindestens zwei Schraubenfederelemente (38) relativ zueinander vorspannbar sind.

19. Herstellungsverfahren eines Zugmittelspanners, insbesondere eines Zugmittelspanners (30) gemäß einem der Patentansprüche 3 bis 6, wobei das Herstellungsverfahren die Schritte umfasst:
a) Bereitstellen (A) eines ersten Befestigungsmittels (32), das einen ersten Befestigungsbereich (42) aufweist, an dem ein erstes Ende eines Zugmittels (28) befestigbar ist,
b) Bereitstellen (B) eines zweiten Befestigungsmittels (34), das einen zweiten Befestigungsbereich (64) aufweist, an dem ein zweites Ende eines Zugmittels (28) befestigbar ist,
c) Bereitstellen (C) eines Verbindungsmittel und Anordnen (D) des ersten (32) und des zweiten Befestigungsmittels (34) am Verbindungsmittel derart, dass das erste (32) und das zweite Befestigungsmittel (34) relativ zueinander und zumindest einseitig begrenzt bewegbar sind, wobei das Verbindungsmittel ein längliches Gehäuse (60) für eine Verbindung zu einem bewegbar angeordneten Element, insbesondere einem Hubtisch (14), aufweist, in dem ein Aufnahmemittel (36) an der einen Seite und das erste Befestigungsmittel (32) an der gegenüberliegenden Seite angeordnet ist, und das zweite Befestigungsmittel (34) ist zumindest teilweise im Aufnahmemittel (36) angeordnet, und
d) Anordnen (E) mindestens eines Tellerfederelements (62) um das zweite Befestigungsmittel (34) zwischen einem Sicherungsbereich (56) des zweiten Befestigungsmittels (34), der im Aufnahmemittel (36) angeordnet ist, und einer Öffnung im Verbindungsmittel derart, dass das erste (32) und das zweite Befestigungsmittel (34) über das mindestens eine Tellerfederelement (62) relativ zueinander vorspannbar sind.

20. Umrüstverfahren einer Schweißanlage, mit den Schritten:
a) Bereitstellen (i) eines Zugmittelspanners (30) mit dem ein Zugmittel (28) spannbar ist, das mindestens ein erstes und ein zweites Ende aufweist, vorzugsweise nur zwei Enden, umfassend
a) ein erstes Befestigungsmittel (32), das einen ersten Befestigungsbereich (42) aufweist, an dem das erste Ende des Zugmittels (28) befestigbar ist,
b) ein zweites Befestigungsmittel (34), das einen zweiten Befestigungsbereich (64) aufweist, an dem das zweite Ende des Zugmittels (28) befestigbar ist, und
c) ein Verbindungsmittel, dass das erste (32) und das zweite Befestigungsmittel (34) derart miteinander verbindet, dass das erste (32) und das zweite Befestigungsmittel (34) relativ zueinander und zumindest einseitig begrenzt bewegbar sind, wobei
d) das erste (32) und das zweite Befestigungsmittel (34) über mindestens ein Federelement (38; 62) relativ zueinander vorspannbar ,
b) Auftrennen (ii) eines Zugmittels (28) der Schweißanlage, insbesondere einer Endloskette oder eines Endlosriemens, so dass das Zugmittel (28) zwei Enden aufweist,
c) Verbinden (iii) des ersten Endes des Zugmittels (28) mit dem ersten Befestigungsbereich (42) des ersten Befestigungsmittels (32) des Zugmittelspanners (30),
d) Verbinden (iv) des zweiten Endes des Zugmittels (28) mit dem zweiten Befestigungsbereich (64) des zweiten Befestigungsmittels (34) des Zugmittelspanners (30) und
e) Anordnen (v) des Verbindungsmittels des Zugmittelspanners (30) an der Schweißanlage, insbesondere an einem durch das Zugmittel bewegbaren Element der Schweißanlage.

21. Umrüstverfahren einer Schweißanlage gemäß Patentanspruch 20, mit dem weiteren Schritt:
f) Einstellen einer Vorspannung des Zugmittels (28) mittels Einstellen des Abstands zwischen dem ersten Befestigungsbereich (42) des ersten Befestigungsmittels (32) und dem zweiten Befestigungsbereich (64) des zweiten Befestigungsmittels (34), insbesondere über einen Stellbereich des Verbindungsmittels.

22. Spannverfahren für ein Zugmittel (28), das mindestens ein erstes und ein zweites Ende umfasst, und die folgenden Schritte aufweist:
a) Verbinden (a) des ersten und des zweiten Endes des Zugmittels (28) über ein Verbindungsmittel eines Zugmittelspanners (30) gemäß einem der Patentansprüche 1 bis 6, so dass das erste und das zweite Ende des Zugmittels (28) relativ zueinander zumindest einseitig begrenzt bewegbar sind,
b) Anordnen (b) von mindestens einem Federelement (38; 62) derart, dass das erste und das zweite Ende des Zugmittels (28) relativ zueinander vorspannbar sind, und
c) Verändern (c) eines relativen Abstands zwischen dem ersten und dem zweiten Ende des Zugmittels (28), die über das Verbindungsmittel verbunden sind, derart, dass das Zugmittel (28) über eine Federvorspannung zwischen dem ersten und dem zweiten Ende vorgespannt wird.

23. Spannverfahren gemäß Patentanspruch 22, wobei der Schritt des Verbindens des ersten und des zweiten Endes des Zugmittels (28) über ein Verbindungsmittel die Schritte umfasst:
d) Verbinden (d) des ersten Endes des Zugmittels (28) mit einem ersten Befestigungsmittel (32), das mit dem Verbindungsmittel verbunden ist,
e) Verbinden (e) des zweiten Endes des Zugmittels (28) mit einem zweiten Befestigungsmittel (34), das mit dem Verbindungsmittel verbunden ist, wobei
f) das erste (32) und das zweite Befestigungsmittel (34) relativ zueinander und zumindest einseitig begrenzt bewegbar sind, so dass ein relativer Abstand zwischen dem ersten und dem zweiten Ende des Zugmittels (28) einstellbar ist.

24. Spannverfahren gemäß Patentanspruch 23, wobei das erste (32) und/oder das zweite Befestigungsmittel (34) formschlüssig mit dem Verbindungsmittel verbunden ist, so dass eine Sicherung gegen ein Lösen des ersten und/oder zweiten Endes des Zugmittels (28) von dem Verbindungsmittel gebildet ist, insbesondere in einer Zugrichtung des Zugmittels (28).

## Claims

1. A traction means tensioner (30) by means of which a traction means (28) is tensionable, which has at least a first and a second end, preferably only two ends, comprising
a) a first fastening means (32) having a first fastening portion (42) at which the first end of the traction means (28) is fastenable,
b) a second fastening means (34) having a second fastening portion (64) at which the second end of the traction means (28) is fastenable, and
c) a coupling means coupling the first (32) and the second fastening means (34) to each other so that the first (32) and the second fastening means (34) are movable with respect to each other and their movability is at least restricted on one side, wherein the coupling means comprises a receiving means (36) in which the second fastening means (34) is arranged at least partly, and a retaining means (40) for a connection to a movably arranged element, especially a lifting table (14), wherein
d) the first (32) and the second fastening means (34) are pre-tensionable with respect to each other via at least two helical spring elements (38), wherein the at least two helical spring elements (38) are arranged with a first axial end at the outer side of the receiving means (36) and with a second axial end at a second fastening portion (64) of the second fastening means (34) and the second fastening means (34) comprises a securing portion (56) arranged in the coupling means, and
e) the first fastening means (32) is stationary with respect to the coupling means.

2. Traction means tensioner (30) according to claim 1, wherein the coupling means couples the first (32) and the second fastening means (34) to each other so that the first fastening portion (42) of the first fastening means (32) and the second fastening portion (64) of the second fastening means (34) are oriented in opposite axial directions.

3. A traction means tensioner (30) by means of which a traction means (28) is tensionable, which has at least a first and a second end, preferably only two ends, comprising
a) a first fastening means (32) having a first fastening portion (42) at which the first end of the traction means (28) is fastenable,
b) a second fastening means (34) having a second fastening portion (64) at which the second end of the traction means (28) is fastenable, and
c) a coupling means coupling the first (32) and the second fastening means (34) to each other so that the first (32) and the second fastening means (34) are movable with respect to each other and their movability is at least restricted on one side, wherein the coupling means comprises an elongated housing (60) for a connection to a movably arranged element, especially a lifting table (14), in which a receiving means (36) is arranged on the one side and the first fastening means (32) is arranged on the opposite side and the second fastening means (34) is arranged at least partly in the receiving means (36), wherein
d) the first (32) and the second fastening means (34) are pre-tensionable with respect to each other via at least one disc spring element (62), wherein the at least one disc spring element (62) is arranged around the second fastening element (34) between a securing portion (56) of the second fastening element (34), which is arranged in the receiving means (36), and an opening in the coupling means, wherein the securing portion (56) is arranged in the receiving means (36).

4. Traction means tensioner (30) according to claim 3, wherein the first fastening means (32) is stationary with respect to the coupling means.

5. Traction means tensioner (30) according to one of the preceding claims 3 or 4, wherein the coupling means couples the first (32) and the second fastening means (34) to each other so that the first fastening portion (42) of the first fastening means (32) and the second fastening portion (64) of the second fastening means (34) are oriented in opposite axial directions.

6. Traction means tensioner (30) according to one of the preceding claims 3 to 5, wherein the coupling means comprises a regulating portion, especially a thread, so that a position of the first fastening portion (42) with respect to the second fastening portion (64) is adjustable, especially a distance between the first (42) and the second fastening portion (64).

7. Usage of a traction means tensioner (30) by means of which a traction means (28) is tensionable, which has at least a first and a second end, preferably only two ends, comprising
a) a first fastening means (32) having a first fastening portion (42) at which the first end of the traction means (28) is fastenable,
b) a second fastening means (34) having a second fastening portion (64) at which the second end of the traction means (28) is fastenable, and
c) a coupling means coupling the first (32) and the second fastening means (34) to each other so that the first (32) and the second fastening means (34) are movable with respect to each other and their movability is at least restricted on one side, wherein
d) the first (32) and the second fastening means (34) are pre-tensionable with respect to each other via at least one spring element (38; 62)
in a welding device, especially in a vibration welding device (1), an infrared welding device, a hot plate welding device or in combinations thereof.

8. Usage of a traction means tensioner (30) according to claim 7, wherein the traction means tensioner (30) is used with a chain or a belt as traction means (28).

9. Welding device, especially a vibration welding device (1), comprising
a) a movably arranged element, especially a lifting table (14),
b) a traction means (28) for moving the movably arranged element, especially for a reciprocating movement of the lifting table (14), and
c) a traction means tensioner (30) by means of which a traction means (28) is tensionable, which has at least a first and a second end, preferably only two ends, comprising
a) a first fastening means (32) having a first fastening portion (42) at which the first end of the traction means (28) is fastenable,
b) a second fastening means (34) having a second fastening portion (64) at which the second end of the traction means (28) is fastenable, and
c) a coupling means coupling the first (32) and the second fastening means (34) to each other so that the first (32) and the second fastening means (34) are movable with respect to each other and their movability is at least restricted on one side, wherein
d) the first (32) and the second fastening means (34) are pre-tensionable with respect to each other via at least one spring element (38; 62),
being coupled via a first fastening portion (42) to a first end of the traction means (28) and via a second fastening portion (64) to the second end of the traction means (28).

10. Welding device according to claim 9, wherein the traction means tensioner (30) is arranged at the movably arranged element, especially at the lifting table (14), by means of the coupling means.

11. Welding device according to claim 9 or 10, wherein the at least one spring element (38; 62) is arranged adjacent to the second fastening means (34) and the second fastening means (34) comprises a securing portion (56) arranged in the coupling means.

12. Welding device according to one of the claims 9 to 11, wherein the first fastening means (32) is stationary with respect to the coupling means.

13. Welding device according to one of the claims 9 to 12, wherein the coupling means couples the first (32) and the second fastening means (34) to each other so that the first fastening portion (42) of the first fastening means (32) and the second fastening portion (64) of the second fastening means (34) are oriented in opposite axial directions.

14. Welding device according to one of the claims 9 to 13, wherein the coupling means comprises a regulating portion, especially a thread, so that a position of the first fastening portion (42) with respect to the second fastening portion (64) is adjustable, especially a distance between the first (42) and the second fastening portion (64).

15. Welding device according to one of the claims 9 to 14, wherein the at least one spring element (38; 62) is chosen from the group consisting of: helical springs (38), spiral springs, flat springs and disc springs (62) or a combination thereof.

16. Welding device according to one of the claims 9 to 15, wherein the at least one spring element (38) is a helical spring arranged with a first axial end at the second fastening means (34), especially at the second fastening portion (64), and with a second axial end at the coupling means so that the first (32) and the second fastening means (34) are pre-tensionable with respect to each other.

17. Welding device according to one of the claims 9 to 15, wherein the at least one spring element (62) is a disc spring arranged around the second fastening means (34) between a securing portion (56) of the second fastening means (34) and an opening in the coupling means so that the first (32) and the second fastening means (34) are pre-tensionable with respect to each other.

18. Production method of a traction means tensioner, especially of a traction means tensioner (30) according to one of the claims 1 or 2, wherein the production method comprises the steps:
a) providing (A) a first fastening means (32) having a first fastening portion (42) at which a first end of a traction means (28) is fastenable,
b) providing (B) a second fastening means (34) having a second fastening portion (64) at which a second end of a traction means (28) is fastenable,
c) providing (C) a coupling means comprising a receiving means (36) in which the second fastening means (34) is arranged at least partly, and a retaining means (40) for a connection to a movably arranged element, especially a lifting table (14), and arranging (D) the first (32) and the second fastening means (34) at the coupling means so that the first (32) and the second fastening means (34) are movable with respect to each other and their movability is at least restricted on one side, wherein the first fastening means (32) is stationary with respect to the coupling means and the second fastening means (34) comprises a securing portion (56) arranged in the coupling means and
d) arranging (E) at least two helical spring elements (38) with a first axial end at the outer side of the receiving means (36) and with a second axial end at a second fastening portion (64) of the second fastening means (34) so that the first (32) and the second fastening means (34) are pre-tensionable with respect to each other via the at least two helical spring elements (38).

19. Production method of a traction means tensioner, especially of a traction means tensioner (30) according to one of the claims 3 to 6, wherein the production method comprises the steps:
a) providing (A) a first fastening means (32) having a first fastening portion (42) at which a first end of a traction means (28) is fastenable,
b) providing (B) a second fastening means (34) having a second fastening portion (64) at which a second end of a traction means (28) is fastenable,
c) providing (C) a coupling means and arranging (D) the first (32) and the second fastening means (34) at the coupling means so that the first (32) and the second fastening means (34) are movable with respect to each other and their movability is at least restricted on one side, wherein the coupling means comprises an elongated housing (60) for a connection to a movably arranged element, especially a lifting table (14), in which a receiving means (36) is arranged on the one side and the first fastening means (32) is arranged on the opposite side and the second fastening means (34) is arranged at least partly in the receiving means (36), and
d) arranging (E) at least one disc spring element (62) around the second fastening element (34) between a securing portion (56) of the second fastening element (34), which is arranged in the receiving means (36), and an opening in the coupling means so that the first (32) and the second fastening means (34) are pre-tensionable with respect to each other via the at least one disc spring element (62).

20. Retrofitting method for a welding device, comprising the steps:
a) providing (i) a traction means tensioner (30) by means of which a traction means (28) is tensionable, which has at least a first and a second end, preferably only two ends, comprising
a) a first fastening means (32) having a first fastening portion (42) at which the first end of the traction means (28) is fastenable,
b) a second fastening means (34) having a second fastening portion (64) at which the second end of the traction means (28) is fastenable, and
c) a coupling means coupling the first (32) and the second fastening means (34) to each other so that the first (32) and the second fastening means (34) are movable with respect to each other and their movability is at least restricted on one side, wherein
d) the first (32) and the second fastening means (34) are pre-tensionable with respect to each other via at least one spring element (38; 62),
b) separating (ii) a traction means (28) of the welding device, especially a continuous chain or a continuous belt, so that the traction means (28) has two ends,
c) coupling (iii) the first end of the traction means (28) to the first fastening portion (42) of the first fastening means (32) of the traction means tensioner (30),
d) coupling (iv) the second end of the traction means (28) to the second fastening portion (64) of the second fastening means (34) of the traction means tensioner (30), and
e) arranging (v) the coupling means of the traction means tensioner (30) at the welding device, especially at an element of the welding device which is movable by means of the traction means.

21. Retrofitting method of a welding device according to claim 20, comprising the further step:
f) adjusting a pretension of the traction means (28) by means of adjusting the distance between the first fastening portion (42) of the first fastening means (32) and the second fastening portion (64) of the second fastening means (34), especially by means of a regulating portion of the coupling means.

22. Tensioning method for a traction means (28) having at least a first and a second end, comprising the following steps:
a) connecting (a) the first and the second end of the traction means (28) via a coupling means of a traction means tensioner (30) according to one of the claims 1 to 6 so that the first and the second end of the traction means (28) are movable with respect to each other and their movability is at least restricted on one side,
b) arranging (b) at least one spring element (38; 62) so that the first and the second end of the traction means (28) are pre-tensionable with respect to each other, and
c) changing (c) a relative distance between the first and the second end of the traction means (28), which are connected via the coupling means so that the traction means (28) is pre-tensioned via a spring pretension between the first and the second end.

23. Tensioning method according to claim 22, wherein the step of connecting the first and the second end of the traction means (28) via a coupling means comprises the steps:
d) coupling (d) the first end of the traction means (28) to a first fastening means (32) coupled to the coupling means,
e) coupling (e) the second end of the traction means (28) to a second fastening means (34) coupled to the coupling means, wherein
f) the first (32) and the second fastening means (34) are movable with respect to each other and at least restricted on one side so that a relative distance between the first and the second end of the traction means (28) is adjustable.

24. Tensioning method according to claim 23, wherein the first (32) and/or the second fastening means (34) are coupled to the coupling means with a positive fit so that a protection against a releasing of the first and/or the second end of the traction means (28) from the coupling means is formed, especially in a traction direction of the traction means (28).

## Revendications

1. Tenseur de moyen de traction (30) avec lequel un moyen de traction (28) peut être tendu, lequel présente au moins une première et une seconde extrémité, de préférence uniquement deux extrémités, comprenant
a) un premier moyen de fixation (32) qui présente une première région de fixation (42) à laquelle la première extrémité du moyen de traction (28) peut être fixée,
b) un second moyen de fixation (34) qui présente une seconde région de fixation (64) à laquelle la seconde extrémité du moyen de traction (28) peut être fixée, et
c) un moyen de connexion qui connecte le premier (32) et le second moyen de fixation (34) ensemble de telle sorte que le premier (32) et le second moyen de fixation (34) peuvent être déplacés l'un par rapport à l'autre et de manière limitée au moins d'un côté, dans lequel le moyen de connexion présente un moyen de réception (36) dans lequel le second moyen de fixation (34) est disposé au moins partiellement et un moyen de maintien (40) pour une connexion à un élément disposé de manière mobile, notamment une table élévatrice (14), dans lequel
d) le premier (32) et le second moyen de fixation (34) peuvent être précontraints l'un par rapport à l'autre par le biais d'au moins deux éléments de ressort hélicoïdal (38), dans lequel les au moins deux éléments de ressort hélicoïdal (38) sont disposés avec une première extrémité axiale sur le côté externe du moyen de réception (36) et avec une seconde extrémité axiale sur une seconde région de fixation (64) du second moyen de fixation (34), et le second moyen de fixation (34) comprend une région de consolidation (56) qui est disposée dans le moyen de connexion, et
e) le premier moyen de fixation (32) est immobile par rapport au moyen de connexion.

2. Tenseur de moyen de traction (30) selon la revendication 1, dans lequel le moyen de connexion connecte le premier (32) et le second moyen de fixation (34) de sorte que la première région de fixation (42) du premier moyen de fixation (32) et la seconde région de fixation (64) du second moyen de fixation (34) sont orientées dans des directions axiales opposées.

3. Tenseur de moyen de traction (30) avec lequel un moyen de traction (28) peut être tendu, lequel présente au moins une première et une seconde extrémité, de préférence uniquement deux extrémités, comprenant
a) un premier moyen de fixation (32) qui présente une première région de fixation (42) à laquelle la première extrémité du moyen de traction (28) peut être fixée,
b) un second moyen de fixation (34) qui présente une seconde région de fixation (64) à laquelle la seconde extrémité du moyen de traction (28) peut être fixée, et
c) un moyen de connexion qui connecte le premier (32) et le second moyen de fixation (34) ensemble de telle sorte que le premier (32) et le second moyen de fixation (34) peuvent être déplacés l'un par rapport à l'autre et de manière limitée au moins d'un côté, dans lequel le moyen de connexion présente un logement longitudinal (60) pour une connexion à un élément disposé de manière mobile, notamment une table élévatrice (14), dans lequel un moyen de réception (36) est disposé sur un des côtés et le premier moyen de fixation (32) est disposé sur le côté opposé, et le second moyen de fixation (34) est disposé au moins partiellement dans le moyen de réception (36), dans lequel
d) le premier (32) et le second moyen de fixation (34) peuvent être précontraints l'un par rapport à l'autre par le biais d'au moins un élément de ressort à disques (62), dans lequel l'au moins un élément de ressort à disques (62) est disposé autour du second moyen de fixation (34) entre une région de consolidation (56) du second moyen de fixation (34) qui est disposée dans le moyen de réception (36) et une ouverture dans le moyen de connexion.

4. Tenseur de moyen de traction (30) selon la revendication 3, dans lequel le premier moyen de fixation (32) est disposé de manière immobile par rapport au moyen de connexion.

5. Tenseur de moyen de traction (30) selon une des revendications précédentes 3 ou 4, dans lequel le moyen de connexion connecte le premier (32) et le second moyen de fixation (34) de sorte que la première région de fixation (42) du premier moyen de fixation (32) et la seconde région de fixation (64) du second moyen de fixation (34) sont orientées dans des directions axiales opposées.

6. Tenseur de moyen de traction (30) selon une des revendications précédentes 3 à 5, dans lequel le moyen de connexion présente une région de réglage, notamment un filet, de sorte qu'une position de la première (42) et de la seconde région de fixation (64) l'une par rapport à l'autre peut être réglée, notamment un écart entre la première (42) et la seconde région de fixation (64).

7. Utilisation d'un tenseur de moyen de traction (30) avec lequel un moyen de traction (28) peut être tendu, lequel présente au moins une première et une seconde extrémité, de préférence uniquement deux extrémités, comprenant
a) un premier moyen de fixation (32) qui présente une première région de fixation (42) à laquelle la première extrémité du moyen de traction (28) peut être fixée,
b) un second moyen de fixation (34) qui présente une seconde région de fixation (64) à laquelle la seconde extrémité du moyen de traction (28) peut être fixée, et
c) un moyen de connexion qui connecte le premier (32) et le second moyen de fixation (34) ensemble de telle sorte que le premier (32) et le second moyen de fixation (34) peuvent être déplacés l'un par rapport à l'autre et de manière limitée au moins d'un côté, dans laquelle
d) le premier (32) et le second moyen de fixation (34) peuvent être précontraints l'un par rapport à l'autre par le biais d'au moins un élément de ressort (38 ; 62) dans une installation de soudage, notamment dans une installation de soudage par vibration (1), une installation de soudage par infrarouge, une installation de soudage par miroir chauffant ou dans des combinaisons de celles-ci.

8. Utilisation d'un tenseur de moyen de traction (30) selon la revendication 7, dans laquelle le tenseur de moyen de traction (30) est utilisé avec une chaîne ou une courroie comme moyen de traction (28).

9. Installation de soudage, notamment installation de soudage par vibration (1), avec
a) un élément disposé de manière mobile, notamment une table élévatrice (14),
b) un moyen de traction (28) pour le déplacement de l'élément disposé de manière mobile, notamment pour le déplacement mobile en élévation de la table élévatrice (14), et
c) un tenseur de moyen de traction (30) avec lequel un moyen de traction (28) peut être tendu, lequel présente au moins une première et une seconde extrémité, de préférence uniquement deux extrémités, comprenant
a) un premier moyen de fixation (32) qui présente une première région de fixation (42) à laquelle la première extrémité du moyen de traction (28) peut être fixée,
b) un second moyen de fixation (34) qui présente une seconde région de fixation (64) à laquelle la seconde extrémité du moyen de traction (28) peut être fixée, et
c) un moyen de connexion qui connecte le premier (32) et le second moyen de fixation (34) ensemble de telle sorte que le premier (32) et le second moyen de fixation (34) peuvent être déplacés l'un par rapport à l'autre et de manière limitée au moins d'un côté, dans laquelle
d) le premier (32) et le second moyen de fixation (34) peuvent être précontraints l'un par rapport à l'autre par le biais d'au moins un élément de ressort (38 ; 62), qui est connecté par le biais de la première région de fixation (42) à la première extrémité du moyen de traction (28) et par le biais de la seconde région de fixation (64) à la seconde extrémité du moyen de traction (28).

10. Installation de soudage selon la revendication 9, dans laquelle le tenseur de moyen de traction (30) est disposé sur l'élément disposé de manière mobile, notamment sur la table élévatrice (14), au moyen du moyen de connexion.

11. Installation de soudage selon une des revendications 9 ou 10, dans laquelle l'au moins un élément de ressort (38 ; 62) est disposé de manière voisine au second moyen de fixation (34) et le second moyen de fixation (34) présente une région de consolidation (56) qui est disposée dans le moyen de connexion.

12. Installation de soudage selon une des revendications 9 à 11, dans laquelle le premier moyen de fixation (32) est disposé de manière immobile par rapport au moyen de connexion.

13. Installation de soudage selon une des revendications 9 à 12, dans laquelle le moyen de connexion connecte le premier (32) et le second moyen de fixation (34) de sorte que la première région de fixation (42) du premier moyen de fixation (32) et la seconde région de fixation (64) du second moyen de fixation (34) sont orientées dans des directions axiales opposées.

14. Installation de soudage selon une des revendications 9 à 13, dans laquelle le moyen de connexion présente une région de réglage, notamment un filet, de sorte qu'une position de la première (42) et de la seconde région de fixation (64) l'une par rapport à l'autre peut être réglée, notamment un écart entre la première (42) et la seconde région de fixation (64).

15. Installation de soudage selon une des revendications 9 à 14, dans laquelle l'au moins un élément de ressort (38 ; 62) est sélectionné parmi le groupe constitué de : ressort hélicoïdal (38), ressort en spirale, ressort à lames et ressort à disques (62) ou une combinaison de ceux-ci.

16. Installation de soudage selon une des revendications 9 à 15, dans laquelle l'au moins un élément de ressort (38) est un ressort hélicoïdal qui est disposé avec une première extrémité axiale sur le second moyen de fixation (34), notamment sur la seconde région de fixation (64), et avec une seconde extrémité axiale sur le moyen de connexion de sorte que le premier (32) et le second moyen de fixation (34) peuvent être précontraints l'un par rapport à l'autre.

17. Installation de soudage selon une des revendications 9 à 15, dans laquelle l'au moins un élément de ressort (62) est un ressort à disques qui est disposé autour du second moyen de fixation (34) entre une région de consolidation (56) du second moyen de fixation (34) et une ouverture dans le moyen de connexion de sorte que le premier (32) et le second moyen de fixation (34) peuvent être précontraints l'un par rapport à l'autre.

18. Procédé de fabrication d'un tenseur de moyen de traction, notamment d'un tenseur de moyen de traction (30) selon une des revendications 1 ou 2, dans lequel le procédé de fabrication comprend les étapes de :
a) mise à disposition (A) d'un premier moyen de fixation (32) qui présente une première région de fixation (42) à laquelle une première extrémité d'un moyen de traction (28) peut être fixée,
b) mise à disposition (B) d'un second moyen de fixation (34) qui présente une seconde région de fixation (64) à laquelle une seconde extrémité d'un moyen de traction (28) peut être fixée,
c) mise à disposition (C) d'un moyen de connexion comprenant un moyen de réception (36) dans lequel le second moyen de fixation (34) est reçu au moins partiellement et un moyen de maintien (40) pour une connexion à un élément disposé de manière mobile, notamment une table élévatrice (14), et agencement (D) du premier (32) et du second moyen de fixation (34) sur le moyen de connexion de telle sorte que le premier (32) et le second moyen de fixation (34) peuvent être déplacés l'un par rapport à l'autre et de manière limitée au moins d'un côté, dans lequel le premier moyen de fixation (32) est immobile par rapport au moyen de connexion et le second moyen de fixation (34) comprend une région de consolidation (56) qui est disposée dans le moyen de connexion, et
d) agencement (E) d'au moins deux éléments de ressort hélicoïdal (38) avec une première extrémité axiale sur le côté externe du moyen de réception (36) et avec une seconde extrémité axiale sur une seconde région de fixation (64) du second moyen de fixation (34) de telle sorte que le premier (32) et le second moyen de fixation (34) peuvent être précontraints l'un par rapport à l'autre par le biais des au moins deux éléments de ressort hélicoïdal (38).

19. Procédé de fabrication d'un tenseur de moyen de traction, notamment d'un tenseur de moyen de traction (30) selon une des revendications 3 à 6, dans lequel le procédé de fabrication comprend les étapes de :
a) mise à disposition (A) d'un premier moyen de fixation (32) qui présente une première région de fixation (42) à laquelle une première extrémité d'un moyen de traction (28) peut être fixée,
b) mise à disposition (B) d'un second moyen de fixation (34) qui présente une seconde région de fixation (64) à laquelle une seconde extrémité d'un moyen de traction (28) peut être fixée,
c) mise à disposition (C) d'un moyen de connexion et agencement (D) du premier (32) et du second moyen de fixation (34) sur le moyen de connexion de telle sorte que le premier (32) et le second moyen de fixation (34) peuvent être déplacés l'un par rapport à l'autre et de manière limitée au moins d'un côté, dans lequel le moyen de connexion présente un logement longitudinal (60) pour une connexion à un élément disposé de manière mobile, notamment une table élévatrice (14), dans lequel un moyen de réception (36) est disposé sur un des côtés et le premier moyen de fixation (32) est disposé sur le côté opposé, et le second moyen de fixation (34) est disposé au moins partiellement dans le moyen de réception (36), et
d) agencement (E) d'au moins un élément de ressort à disques (62) autour du second moyen de fixation (34) entre une région de consolidation (56) du second moyen de fixation (34) qui est disposée dans le moyen de réception (36) et une ouverture dans le moyen de connexion de telle sorte que le premier (32) et le second moyen de fixation (34) peuvent être précontraints l'un par rapport à l'autre par le biais de l'au moins un élément de ressort à disques (62).

20. Procédé de conversion d'une installation de soudage avec les étapes de :
a) mise à disposition (i) d'un tenseur de moyen de traction (30) avec lequel un moyen de traction (28) peut être tendu, lequel présente au moins une première et une seconde extrémité, de préférence uniquement deux extrémités, comprenant
a) un premier moyen de fixation (32) qui présente une première région de fixation (42) à laquelle la première extrémité du moyen de traction (28) peut être fixée,
b) un second moyen de fixation (34) qui présente une seconde région de fixation (64) à laquelle la seconde extrémité du moyen de traction (28) peut être fixée, et
c) un moyen de connexion qui connecte le premier (32) et le second moyen de fixation (34) ensemble de telle sorte que le premier (32) et le second moyen de fixation (34) peuvent être déplacés l'un par rapport à l'autre et de manière limitée au moins d'un côté, dans lequel
d) le premier (32) et le second moyen de fixation (34) peuvent être précontraints l'un par rapport à l'autre par le biais d'au moins un élément de ressort (38 ; 62),
b) séparation (ii) d'un moyen de traction (28) de l'installation de soudage, notamment d'une chaîne sans fin ou d'une courroie sans fin, de sorte que le moyen de traction (28) présente deux extrémités,
c) connexion (iii) de la première extrémité du moyen de traction (28) à la première région de fixation (42) du premier moyen de fixation (32) du tenseur de moyen de traction (30),
d) connexion (iv) de la seconde extrémité du moyen de traction (28) à la seconde région de fixation (64) du second moyen de fixation (34) du tenseur de moyen de traction (30) et
e) agencement (v) du moyen de connexion du tenseur de moyen de traction (30) sur l'installation de soudage, notamment sur un élément de l'installation de soudage pouvant être déplacé par le moyen de traction.

21. Procédé de conversion d'une installation de soudage selon la revendication 20, avec l'étape supplémentaire de :
f) réglage d'une précontrainte du moyen de traction (28) au moyen du réglage de l'écart entre la première région de fixation (42) du premier moyen de fixation (32) et la seconde région de fixation (64) du second moyen de fixation (34), notamment par le biais d'une région de réglage du moyen de connexion.

22. Procédé de tension pour un moyen de traction (28) qui comprend au moins une première et une seconde extrémité, et présente les étapes suivantes de :
a) connexion (a) de la première et de la seconde extrémité du moyen de traction (28) par le biais d'un moyen de connexion d'un tenseur de moyen de traction (30) selon une des revendications 1 à 6 de sorte que la première et la seconde extrémité du moyen de traction (28) peuvent être déplacées l'une par rapport à l'autre de manière limitée au moins d'un côté,
b) agencement (b) d'au moins un élément de ressort (38 ; 62) de telle sorte que la première et la seconde extrémité du moyen de traction (28) peuvent être précontraintes l'une par rapport à l'autre, et
c) modification (c) d'un écart relatif entre la première et la seconde extrémité du moyen de traction (28) qui sont connectées par le biais du moyen de connexion de telle sorte que le moyen de traction (28) est précontraint entre la première et la seconde extrémité par le biais d'une précontrainte de ressort.

23. Procédé de tension selon la revendication 22, dans lequel l'étape de la connexion de la première et de la seconde extrémité du moyen de traction (28) par le biais d'un moyen de connexion comprend les étapes de :
d) connexion (d) de la première extrémité du moyen de traction (28) à un premier moyen de fixation (32) qui est connecté au moyen de connexion,
e) connexion (e) de la seconde extrémité du moyen de traction (28) à un second moyen de fixation (34) qui est connecté au moyen de connexion, dans lequel
f) le premier (32) et le second moyen de fixation (34) peuvent être déplacés l'un par rapport à l'autre et de manière limitée au moins d'un côté de sorte qu'un écart relatif entre la première et la seconde extrémité du moyen de traction (28) peut être réglé.

24. Procédé de tension selon la revendication 23, dans lequel le premier (32) et/ou le second moyen de fixation (34) est connecté par conjugaison de formes au moyen de connexion de sorte qu'une consolidation contre un desserrage de la première et/ou seconde extrémité du moyen de traction (28) est formée par le moyen de connexion, notamment dans un sens de traction du moyen de traction (28).
